# EUROPÄISCHE PATENTSCHRIFT

(11) **EP 2 713 465 B1**
(45) Veröffentlichungstag und Bekanntmachung des Hinweises auf die Patenterteilung: **09.11.2016**
(21) Anmeldenummer: 12186479.7
(22) Anmeldetag: 28.09.2012
(51) Int. Cl.: H02J 3/30, H02J 15/00, H02K 7/02

(54) **Energiespeichermodul mit Gleichspannungszwischenkreis**
Energy storage module with intermediate DC circuit
Module de stockage d'énergie avec circuit intermédiaire à tension continue

(43) Veröffentlichungstag der Anmeldung: 02.04.2014
(73) Patentinhaber: Enrichment Technology Company Ltd., 52409 Jülich (DE)
(72) Erfinder: vor dem Esche, Rainer, 52525 Heinsberg (DE); Schäfer, Christoph, 52072 Aachen (DE); Treppmann, Christoph, 52074 Aachen (DE)
(74) Vertreter: Jostarndt Patentanwalts-AG

(56) Entgegenhaltungen:
- US-A1- 2012 187 922
- US-B1- 7 400 052
- "DYNAMISCHER SPEICHER FUR HOHE KURZZEITENERGIEN", ELEKTROTECHNIK FUER DIE AUTOMATISIERUNG, VOGEL BUSINESS MEDIA GMBH & CO.KG, Bd. 70, Nr. 16, 30. September 1988 (1988-09-30), Seite 14/15, XP000026964, ISSN: 1431-9578

## Beschreibung

### Gebiet der Erfindung

Die Erfindung betrifft ein Energiespeichermodul mit Gleichspannungszwischenkreis und auf ein Verfahren zum Steuern eines solchen Energiespeichermoduls.

### Hintergrund der Erfindung

Die Energie zum Betrieb eines Stromnetzes wird von diversen unterschiedlichen Kraftwerktypen geliefert. Hierbei sind die meisten Kraftwerke, wie beispielsweise Atomkraftwerke, Kohlekraftwerke, Gaskraftwerke, Windenergie-, Biogasanlagen oder Solarkraftwerke, lediglich Energieerzeuger zur Einspeisung von Energie in das nicht-lokale Stromnetz. Nicht-lokale Stromnetze sind beispielsweise Übertragungsnetze, wie beispielsweise in Deutschland durch Amprion, 50Hertz, Tennet und TransnetEnBW betrieben. Diese Übertragungsnetze sind Teil des europäischen Verbundnetzes. Die oben angeführten Kraftwerke können als reine Energieerzeuger keine überschüssige Energie im Bedarfsfall aus dem Stromnetz aufnehmen und speichern. Energiespeicher können dagegen zur Aufnahme und Abgabe von Energie an ein Stromnetz verwendet werden. Energiespeicher sind beispielsweise zentrale Energiespeicher, wie Pumpspeicherwerke, oder dezentrale Energiespeicher, wie beispielsweise Batterien oder Schwungradspeicher. Die Pumpspeicherwerke stellen weitgehend witterungsunabhängige und damit in der Regel immer verfügbare Energiespeicher dar. Zentrale Energiespeicher sind im Allgemeinen auf eine große Kapazität ausgelegt. Zur Bereitstellung von Regelenergie für das nicht-lokale Stromnetz sind sie aufgrund der verfügbaren Leistung geeignet, um im nicht-lokalen Stromnetz entsprechend Wirkung entfalten zu können. Pumpspeicherkraftwerke können je nach Baugröße eine Leistung von einigen 100 MW und mehr besitzen, wobei die Generatoren MW und mehr besitzen, wobei die Generatoren allerdings meist dazu ausgelegt sind, unter Volllast Strom zu produzieren und somit die volle Leistung des Pumpspeicherwerks bei entsprechendem Wirkungsgrad zeitnah nutzen zu können. Diese Betriebsweise ist nicht dafür geeignet, die Netzqualität in einem kleinen lokalen Stromnetz mit einem im Vergleich zur Kapazität des Pumpspeicherkraftwerks eher vernachlässigbarem Strombedarf zu stabilisieren oder zu verbessern.

Zentral genutzte Batteriespeicheranlagen sind im Aufbau mit dem Ziel, einen Pilotbetrieb für netzstabilisierende (ortsungebundene) Aufgaben (Regelenergie) zu realisieren. Die bisher geplanten erfüllen jedoch keine ortsgebundenen Aufgaben. Grundsätzlich sind Batteriespeicher jedoch aufgrund ihrer immanenten Zusammenhänge zwischen Leistung, Kapazität und Alterung für derartige Anwendungen mit mehreren Lastzyklen pro Tag nicht gut geeignet.und degradieren schnell aufgrund von Temperatureinflüssen, Systemausfällen und Fehlbedienung. Daher sind Batteriespeicher sehr wartungsintensiv. Außerdem stellen Batteriespeicher wegen ihres hohen Brand- und Chemierisiko eine Umwelt- und/oder Wassergefährdung dar, die einen enormen Absicherungsaufwand erfordern.

Dezentrale Energiespeicher sind im Allgemeinen optimiert für die Stabilisierung des lokalen Strombedarfs und für die Lieferung von Regelenergie zur Stützung des nicht-lokalen Stromnetzes nicht ausgelegt und nicht qualifiziert. Solche Anlagen können nicht zur Bedarfsdeckung für alle Stromnetze beitragen. Eine Verschaltung der dezentralen Speicher zu einer nicht-lokal und lokal wirkenden Anlage erfolgt bisher nicht.

US 7 400 052 B1 offenbart eine Notstromversorgung zur Versorgung einer kritischen Last bei Bedarf, wobei die kritische Last unter Normalbedingungen durch eine Primärenergiequelle (Stromnetz) versorgt wird. Die Notstromversorgung umfasst dabei einen einzelnen Schwungradenergiespeicher und einen Druckluftspeicher, der seine gespeicherte Energie über eine Gasturbine gekoppelt mit einem Motor/Generator zur Stromerzeugung abgeben kann. Die kritische Last, die Primärenergiequelle und die Notstromversorgungen (Schwungradenergiespeicher + System aus Gastank und Gasturbine) sind über einen DC-Bus miteinander verbunden, aus dem die kritische Last versorgt wird. Hierbei gibt die Notstromversorgung (Schwungradspeichereinheit) nur bei einer Unterbrechung der Primärenergieversorgung Energie in den DC-Bus ab. Die DC-Bus-Versorgung wird in einem kurzen Zeitintervall (Sekunden, erstes Zeitintervall) durch den Schwungradspeicher und bei längeren Unterbrechungen (zweites Zeitintervall folgend auf das erste Zeitintervall) auch durch die Gasturbine versorgt. In dem danach folgenden dritten Zeitintervall versorgt alleine die Gasturbine den DC-Bus, während der Schwungradspeicher wieder aus dem DC-Bus geladen wird. Der Betrieb des Schwungradspeichers ist hier alleine ein vorrübergehender, auf seltene und kurze zeitliche Intervalle begrenzt. Der Schwungradspeicher reguliert oder stabilisiert in keinem Fall das externe Stromnetz. Der Betrieb des Schwungradspeichers ist dabei auf die Zeiten ohne das externe Stromnetz begrenzt.

Der Artikel "Dynamischer Speicher für hohe Kurzzeitenergien für die Automatisierung", Vogel Business Media GmbH & Co KG, Bd. 70. Nr.16, Seiten 14/15 (1988) offenbart die Vorzüge von Schwungradenergiespeicher im Vergleich zu Batteriespeichern, insbesondere die Lastwechselfestigkeit, und macht technische Angabe zum Betrieb von Schwungradenergiespeichern. Als Anwendungsbeispiel wird hier die Stützung von netzausfallsicheren Produktionsmaschinen angegeben, wo über 30s eine Energie von 70kW zur Verfügung gestellt werden kann. Es können auch mehrere Anlagen parallel geschaltet werden, um die Leistung zu erhöhen.

Es wäre daher wünschenswert, einen effektiven, umweltverträglichen und leicht zu betreibenden Energiespeicher mit großer Kapazität zur Verfügung zu haben, der es ermöglicht, bedarfsgemäß gleichzeitig eine Verbesserung von lokaler Netzqualität und die Versorgungssicherheit für nicht-lokale Stromnetze erreichen zu können und somit als Energiespeichersystem mit genügender Wirkung für beide Zwecke betrieben werden kann.

### Zusammenfassung der Erfindung

Es ist daher eine Aufgabe der Erfindung, einen effektiven, umweltverträglichen und leicht zu betreibenden Energiespeicher mit großer Kapazität zur Verfügung zu haben, der es ermöglicht, bedarfsgemäß gleichzeitig eine Verbesserung von lokaler Netzqualität und die Versorgungssicherheit für nicht-lokale Stromnetze erreichen zu können und somit als Energiespeichersystem mit genügender Wirkung für beide Zwecke betrieben werden kann.

Diese Aufgabe wird gelöst durch ein Energiespeichermodul zur reversiblen Speicherung von elektrischer Energie in Form von mechanischer Rotationsenergie, umfassend mehrere Schwungradspeichereinheiten, mindestens ein Regelsystem und mindestens eine Modulsteuereinheit, wobei die Schwungradspeichereinheiten elektrisch parallel über einen gemeinsamen Gleichspannungszwischenkreis verbunden sind, wobei das Regelsystem mit einer Ausgangsseite mit dem gemeinsamen Gleichspannungszwischenkreis und mit einer Eingangsseite mit mindestens einem überregionalen Wechselspannungsnetz als eines der externen Spannungsnetze verbunden ist und dazu ausgestaltet ist, den Energiefluss zwischen dem überregionalen Wechselspannungsnetz als angeschlossenes externes Spannungsnetz und den Schwungradspeichereinheiten zur Ausführung von nicht-ortsgebundenen Regel- und Systemaufgaben in dem überregionalen Wechselspannungsnetz in einer von der Modulsteuereinheit vorgegebenen Weise mittels Übermittlung geeigneter Drehmomentvorgaben an die Schwungradspeichereinheiten zur Abgabe oder Aufnahme von Energie an/aus dem Gleichspannungszwischenkreis so zu regeln, dass die Gleichspannung bei Abgabe von Energie zumindest in das überregionalen Wechselspannungsnetz und bei Aufnahme von Energie zumindest aus dem überregionalen Wechselspannungsnetz zwischen einem oberen Schwellwert und einem unteren Schwellwert im Wesentlichen konstant bleibt.

Durch die Verwendung von Schwungradspeichereinheiten wird die Energie in Form mechanischer Rotationsenergie gespeichert. Diese Form der Energiespeicherung benötigt keine chemischen und/oder brandgefährlichen Stoffe, so dass von solchen Speichern keine Umwelt- und Wassergefährdung ausgeht. Da die Schwungradspeichereinheiten elektrisch parallel an einen Gleichspannungszwischenkreis angeschlossen sind, kann auf einfache Weise aus den einzelnen Einheitenkapazitäten und Einheitenleistungen der jeweiligen Schwungradspeichereinheiten eine gemeinsame Modulsspeicherkapazität und eine gemeinsame Modulleistung für das Energiespeichermodul aufsummiert werden. Da im Prinzip beliebig viele Schwungradspeichereinheiten zu dem Gleichspannungszwischenkreis elektrisch parallel hinzugeschaltet werden können, ist die Modulkapazität und Modulleistung an den Bedarf anpassbar und im Prinzip beliebig skalierbar. Dadurch wird ein Energiespeicher bereitgestellt, der eine große Kapazität besitzt, die es ermöglicht, neben einer Verbesserung der lokaler Netzqualität in lokalen Stromnetzen (bespielsweise Wechselspannungsnetze) auch die Versorgungssicherheit für nicht-lokale Stromnetze (beispielsweise Wechselspannungsnetze) erreichen zu können. Durch die Verwendung von Gleichspannung in dem gemeinsamen Gleichspannungszwischenkreis wird zudem der regelungstechnische Aufwand geringer, beispielsweise ist. keine Synchronisierung notwendig. Bei der Verwendung von nur einem großen Netzwechselrichter als Regelsystem hat man zudem geringere Verluste als bei einer Verwendung von mehreren kleinen Netzwechselrichtern, wenn beispielsweise alle Schwungradspeichereinheiten separat voneinander mit eigenen Netzwechselrichtem an ein Stromnetz angeschlossen wären. Die Verwendung von nur einem großen Netzwechselrichter ist zudem kostengünstiger im Vergleich zur Veerwendung mehrerer kleinerer Netzwechselrichter. Das erfindungsgemäße Energiespeichermodul als Energiespeicher kann somit mit genügender Wirkung für beide Zwecke betrieben werden. Das Energiespeichermodul kann zudem sehr effektiv betrieben werden, da die bereitgestellte Modulspeicherkapazität und Modulleistung durch eine geeignete Wahl der Anzahl an Schwungradspeichereinheiten, die an den Gleichstromzwischenkreis angeschlossen werden, auf die jeweiligen Bedürfniss angepasst und somit ungenutzte Überkapazitäten vermieden werden können. Die Regelung des Gleichspannungszwischenkreises auf eine Soll-Gleichspannung ist außerdem einfach zu realisieren, was die Gesamtregelung des Energiespeichermoduls vereinfacht. Außerdem wird durch die elektrisch parallele Anordnung der Schwungradspeichereinheiten eine Fehlerredundanz erreicht, die es verhindert, dass durch den Ausfall einer Schwungradspeichereinheit die Verfügbarkeit des Energiespeichermoduls für seine Regel- und Systemaufgaben in den angeschlossenen externen Stromnetzen (beispielsweise Wechselspannungsnetzen) wesentlich beeinträchtigt. Die Soll-Gleichspannung hängt dabei von den angeschlossenen externen Stromnetzen und den im Energiespeichermodul verwendeten Bauteilen ab. Ein technisch sinnvoller Bereich für die Zwischenkreisspannung bei Anschluss der Anlage an ein Niederspannungsnetz liegt zum Beispiel zwischen 550V und 1000V. Die untere Grenze wird im wesentlichen durch die Spannungslage des Niederspannungsnetzes definiert wohingegen die obere Grenze im wesentlichen durch die technischen Eigenschaften der verwendeten Bauteile im Energiespeichermodul bestimmt wird. Für Mittelspannungsnetze oder Gleichspannungsnetze kann die Soll-Gleichspannung im Zwischenkreis aus technischen und wirtschaftlichen Gründen auch bei anderen Werten liegen, die sich an der Spannungslage dieser Netze orientiert. In einem Ausführungsbeispiel ist die Soll-Gleichspannung im Gleichspannungszwischenkreis 750 V ± 5 V.

Das erfindungsgemäße Energiespeichermodul stellt einen an beliebigen Orten variabel und mit geringem Aufwand schnell einsetzbaren Energiespeicher dar. Das Energiespeichermodul ist dabei dazu ausgestaltet, über das Regelsystem an ein externes Spannungsnetz als ein lokales oder nicht-lokales Netz oder bei einer geeigneten Ausgestaltung des Regelsystems auch an mehrere externe Spannungsnetze, beispielsweise an ein oder mehrere lokale Netze und/oder ein nicht-lokales Netz, angeschlossen zu werden. Die Abgabe von Energie in das oder die externen Spannungsnetze oder die Aufnahme von Energie aus dem oder den externen Spannungsnetzen erfolgt aufgrund der Drehmomentvorgaben durch die Modulsteuereinheit. Diese Drehmomentvorgaben basieren dabei auf Regel- und Systemaufgaben. Die Regel- und Systemaufgaben teilen sich dabei auf in ortsgebundene Regel und Systemaufgaben für lokale Stromnetze und in nicht-ortsgebundene Regel- und Systemaufgaben in nicht-lokalen Stromnetzen. Hierbei kann das Energiespeichermodul zur Ausführung der nicht-ortsgebundenen und ortsgebundene Regel und Systemaufgaben entweder direkt mit einem nicht-lokalen Stromnetz und einem oder mehreren lokalen Stromnetzen verbunden sein oder über ein angeschlossenes lokales Stromnetz indirekt mit einem nicht-lokalen Stromnetz verbunden sein, sofern das lokale Stromnetz selber mit dem nicht-lokalen Stromnetz verbunden ist.

Die Modulsteuereinheit ermöglicht es, dass das Energiespeichermodul unterschiedliche Regel- und Systemaufgaben in gegebenenfalls separat angeschlossenen lokalen und nicht-lokalen Stromnetzen ausführen kann und damit eine gleichzeitige Verbesserung von lokaler Netzqualität in den lokalen Stromnetzen und Versorgungssicherheit in nicht-lokalen Stromnetzen bewirken kann. Ortsgebundene Regel- und Systemaufgaben beziehen sich dabei auf lokale Stromnetze (beispielsweise lokale Wechselspannungsnetze) und sind beispielsweise die Sicherstellung der benötigten Netzspannung, die Blindleistungskompensation durch Regelung der Amplituden- und Phasenlage des Spannungssignals, das Bereitstellen einer lokalen Leistungsreserve für sich eventuell hinzuschaltende größere Stromabnehmer oder Einschaltstromspitzen und das Speichern von lokalen Energieüberschussmengen. Nicht-ortsgebundene Regel- und Systemaufgaben beziehen sich dabei auf nicht-lokale Stromnetze (nicht-lokale Wechselspannungsnetze) und sind beispielsweise die Bereitstellung von primärer oder sekundärer Regelleistung. Die Regelleistung (auch Reserveleistung) gewährleistet die Netzstabilität bei unvorhergesehenen Ereignissen im Stromnetz. Dazu können kurzfristig Leistungsanpassungen bei regelfähigen Kraftwerken durchgeführt und schnell anlaufende Kraftwerke oder Energiespeicher wie das erfindungsgemäße Energiespeichermodul eingesetzt werden. Weitere nicht-ortsgebundene Regel- und Systemaufgaben sind außerdem die Schwarzstartunterstützung im Falle eines Netzausfalls, die allgemeine Speicherung von Leistungsspitzen und die Blindleistungskompensation im nicht-lokalen Stromnetz. Weitere ortsgebundene und nicht-ortsgebundene Regel- und Systemaufgaben für lokale und nicht-lokale Stromnetze sind die Bereitstellung von Redundanzen (Ausfallsicherheit) bei der Stromversorgung in Kombination mit den bereits vorhandenen Energielieferanten und ein Blindleistungsmanagement.

Hierbei bezeichnet das nicht-lokale Stromnetz ein Wechselspannungsnetz, das sich überregional über sehr große Gebiete erstreckt und in dem die nicht-ortsgebundenen Regel- und Systemaufgaben durchgeführt werden. Nicht-lokale Stromnetze sind beispielsweise Übertragungs- oder Verteilnetze (öffentliches Stromnetz). Das öffentliche Stromnetz in Deutschland setzt sich beispielsweise aus vier Übertragungsnetzen zusammen, die von den Netzbetreibern Amprion, 50Hertz, Tennet und TransnetzEnBW betrieben werden. Diese vier Übertragungsnetze bilden zusammen den Netzregelverbund für Deutschland. Darunter befinden sich regionale Verteilnetze. In anderen Ländern werden entsprechende Übertragungsnetze durch andere Netzbetreiber betrieben. In den Übertragungsnetzen wird die Frequenz des Stromnetzes stabil gehalten (Frequenzregulierung). Das übergeordnete europäische Verbundnetz aus den jeweiligen Übertragungsnetzen in den einzelnen Staaten ist ebenfalls als nicht-lokales Stromnetz anzusehen, wofür allerdings derzeit nur die Standards für die Regelenergie festgelegt sind. Die nicht-ortsgebundenen Regel- und Systemaufgaben werden in den jeweiligen Übertragungsnetzen durchgeführt. Als lokales Stromnetz im Sinne der Erfindung wird bespielsweise auch ein Wechselspannungsnetz bezeichnet, in dem die voranstehend beschriebenen ortsgebundenen Regel- und Systemaufgaben durchgeführt werden. Lokale Stromnetze sind in der Regel räumlich begrenzt, beispielsweise ein betriebsinternes Stromnetz auf einer Betriebsanlage oder ein Stromnetz innerhalb eines Hauses oder Gebäudekomplexes.

Das Regelsystem regelt dabei den Energiefluss zwischen einem oder mehreren angeschlossenen externen Spannungsnetzen (lokales Stromnetz und/oder nicht-lokales Stromnetz) und den Schwungradspeichereinheiten des Energiespeichermoduls. Das Regelsystem regelt dabei die Gleichspannung des Zwischenkreises im Wesentlichen konstant auf eine Soll-Gleichspannung, beispielsweise 750 V. Der Ausdruck "im Wesentlichen konstant" bedeutet, dass die Gleichspannung durchaus temporär innerhalb zulässiger Toleranzen, beispielsweise ±5 V, schwanken kann, wobei das Regelsystem stets derart regelt, dass die tatsächlich vorliegende Gleichspannung des Zwischenkreises der Soll-Gleichspannung im Idealfall entspricht. Der Toleranzbereich kann aber auch größer als die oben angegebenen Werte sein. Das Regelsystem schafft diese Regelung, indem es sich des externen Spannungsnetzes oder der externen Spannungsnetze je nach Leistungsflussrichtung als unerschöpfliche Stromquelle (Laden der Schwungradspeichereinheiten mit Energie) beziehungsweise als Senke für die überschüssige Energie im Gleichspannungszwischenkreis bedient. Geeignete Regelsysteme umfassen dazu einen oder mehrere Netzwechselrichter oder Hoch-/Tiefsetzsteller.

Wären die lokalen und nicht-lokalen Stromnetze lediglich in einem gemeinsamen Aufschaltpunkt mit dem Energiespeichermodul verbunden, so würde die von dem Energiespeichermodul eingespeiste Energie nur in das externe Spannungsnetz eingespeist werden, das den größeren Energiebedarf (geringeren Innenwiderstand) hat. Hiermit könnten aber unter Umständen nicht mehr gezielt ortsgebundene und nicht-ortsgebundene Regel- und Systemaufgaben gemäß einer Aufgabenverteilung durchgeführt werden. Das Regelsystem steuert den Energiefluss zu den angeschlossenen externen Spannungsnetzen in der von der Modulsteuereinheit vorgesehenen Weise. In einer bevorzugten Ausführungsform ist das Regelsystem außerdem dazu vorgesehen, ein oder mehrere der angeschlossenen externen Spannungsnetze im Bedarfsfall von dem Energiespeichermodul zu trennen. Sollte eines der angeschlossenen externen Spannungsnetze ausfallen, so trennt das Regelsystem dieses externe Spannungsnetz unter Umständen sofort innerhalb weniger Millisekunden von dem Energiespeichermodul, damit dieses weiterhin für die anderen externen Spannungsnetze und die interne Spannungsversorgung betriebsbereit bleibt. Ansonsten würde gegebenenfalls ein Kurzschluss oder eine Überlastsituation eintreten. In einer weiteren Ausführungsform umfasst das Energiespeichermodul dazu eine Regelbox mit mindestens einem Regelglied und einen oder mehrere Trennschalter, die durch das Regelglied gesteuert werden und deren Anzahl von der Anzahl der an die Regeleinheit angeschlossenen externen Spannungsnetze abhängt. Die Regelbox ist dabei direkt oder über das Regelsystem mit der Modulsteuereinheit über eine Datenleitung verbunden, über die die Modulsteuereinheit Konfigurationsdaten der Regelfunktion an das Regelglied übertragen kann.

In einer Ausführungsform ist neben dem Regelsystem, das die Gleichspannung im Gleichsannungszwischenkreis zwischen den oberen und unteren Schwellwerten konstant hält (ursprüngliches Regelsystem), ein oder mehrere weitere Regelsystem(e) (zusätzliche Regelsystem(e)) parallel mit dem Gleichspannungszwischenkreis verbunden. Dieser oder diese zusätzlichen Regelsysteme können bespielsweisejeweils ein weiteres externes Spannungsnetz in gleicher Weise wie das ursprüngliche Regelsystem an den Gleichspannungszwischenkreis anschließen. Dies bietet den Vorteil, dass das ursprüngliche Regelsystem die Aufschaltebedingungen (Grid-Codes) eines externen Spannungsnetzes ohne Einschränkungen einhalten und ausführen kann, während ein zweites Regelsystem bespielsweise hiervon abweichende Grid-Codes ausführen (anderes externes Spannungsnetz) kann.

Als Schwungradspeichereinheit wird hierbei die funktionale Einheit mit einem Rotor als Schwungmasse, über dessen Rotation die Energie in Form von mechanischer Rotationsenergie gespeichert wird, mit Lager- und Motorkomponenten zum Beschleunigen, Abbremsen und Drehen des Rotors bei einer bestimmten Drehzahl, mit einem elektromagnetischen Wandler zur Umwandlung elektrischer in mechanische Energie und umgekehrt und mit Anschlüssen an andere Module, wie beispielsweise das Vakuummodul oder eine interne Stromversorgung für die Module, bezeichnet. Rotoren von Schwungradspeichereinheiten können je nach Ladezustand mit Drehzahlen auch von 50000 Umdrehungen pro Minute rotieren. Ein typischer Drehzahlbereich liegt zwischen 15000 Umdrehungen pro Minute und der maximalen Drehzahl. Die einzelnen Schwungradspeichereinheiten besitzt eine Einheitenkapazität und Einheitenleistung, die von den Betriebsbedingungen, wie beispielsweise die Drehzahl des Rotors und der Auslegung des elektromagnetischen Wandlers, abhängen. Beispielsweise kann die Einheitenkapazität circa 5 kWh und die Einheitenleistung 20 bis 200 kW betragen. Die Speicherung der Energie in Form von Rotationsenergie ist reversibel, da aus den Schwungradspeichereinheiten je nach Bedarf die als Rotationsenergie gespeicherte Energie wieder entnommen und als elektrische Energie über den Gleichspannungszwischenkreis und das Regelsystem in ein externes Stromnetz eingespeist werden kann und umgekehrt. Schwungradenergiespeicher besitzen den Vorzug, dass sie die aufzunehmenden oder abzugebenden Mengen an Energie sehr variabel und präzise für die Abnehmer bereitstellen können und diese Energie in Form von mechanischer Energie speichern. Damit stellen Schwungradenergiespeicher ein wesentlich kleineres Gefahrenpotential im Brandfall dar als beispielsweise eine größere Ansammlung an Batterien, zusammengeschaltet als Batterie-Energiespeicheranlage, oder Wasserstoffspeicheranlagen mit Wasserstofftanks mit dem brennbaren Wasserstoff als Gefahrenpotential. Somit stellen Schwungradspeichereinheiten eine umweltsicherere Technologie für die Energiebereitstellung im Vergleich zu anderen Speichertechnologien dar und sind für beliebig viele Lastzyklen pro Tag gut geeignet. Bei der Energiebereitstellung oder Leistungsbereitstellung wird von negativer Energiebereitstellung (-fluss) oder negativer Leistungsbereitstellung (-fluss) gesprochen, wenn Energie oder Leistung aus dem externen Spannungsnetz und/oder dem Gleichspannungszwischenkreis aufgenommen und in den Schwungradspeichereinheiten in Form von mechanischer Rotationsenergie gespeichert wird. Entsprechend wird von positiver Energiebereitstellung (-fluss) oder Leistungsbereitstellung (-fluss) gesprochen, wenn aus den Schwungradspeichereinheiten die in Form von mechanischer Rotationsenergie gespeicherte Energie oder Leistung mittels Abbremsen der Schwungräder (oder Rotoren) in das externe Spannungsnetz und/oder den Gleichspannungszwischenkreis als elektrische Energie oder Leistung eingespeist wird. Hierbei ist die Fähigkeit von Schwungradspeichern, Energie innerhalb von wenigen Millisekunden zur Verfügung stellen zu können, ebenso vorteilhaft wie die Fähigkeit, die spezifizierte Leistung über einen Zeitraum von mehreren Minuten zu liefern. Bei einer Drehzahl von zum Beispiel 50000 Umdrehungen pro Minute kann eine Schwungradspeichereinheit je nach Ausführung eine Leistung von zum Beispiel bis zu 30 kW - 200 kW aufnehmen oder abgeben. In einer Ausführungsform ist die Anzahl der Schwungradspeichereinheiten im Schwungradmodul darauf angepasst, eine Modulspeicherkapazität für das Energiespeichermodul bereitzustellen, die mindestens ausreicht, um über einen Zeitraum von mehr als 30s Nennstrom in ein nicht-lokales Wechselspannungsnetz (Stromnetz) einspeisen zu können.

Die Modulsteuereinheit ist eine Komponente in dem Energiespeichermodul, die das Energiespeichermodul steuert, d.h., die die gewünschten Betriebszustände und Betriebsparameter einstellt und die das Energiespeichermodul entsprechend eines Betriebsplans, der die gewünschten Betriebszustände als Funktion der Zeit enthält, steuert. Dem Betriebsplan liegen die ortsgebundenen und nicht-ortsgebundenen Regel- und Systemaufgaben zugrunde. Die Modulsteuereinheit ist für die Steuerung des Energiespeichermoduls mit den jeweiligen Komponenten im Energiespeichermodul, umfassend das Regelsystem und die Schwungsradspeichereinheiten über geeignete Datenleitungen, beispielsweise ein Datenbussystem wie beispielsweise ein Canbus, ein Profibus oder als Ethernet, verbunden.

In einer Ausführungsform ist die Modulsteuereinheit zur zeitbezogenen Generierung und Übermittlung der Drehmomentvorgaben für die Schwungradspeichereinheiten vorgesehen, woraufhin die Schwungradspeichereinheiten aufgrund der zeitbezogenen Drehmomentvorgaben Strom in den Gleichspannungzwischenkreis einspeisen oder entnehmen. Durch die Kombination mit der Gleichspannungsregelung ergibt sich ein Leistungsfluss in das Energiespeichermodul hinein oder daraus heraus.

In einer Ausführungsform erhält jede Schwungradspeichereinheit individuelle Drehmomentvorgaben von der Modulsteuereinheit. Bei individuellen Drehmomentvorgaben kann auf den jeweiligen Speicherzustand der Schwungradspeichereinheiten reagiert werden, so dass bereits voll oder nahezu voll geladene Schwungradspeichereinheiten keine weitere Energie als Schutz vor Überladung mehr aufnehmen müssen oder wenig geladene Schwungradspeichereinheiten nicht zu tief auf eine für den Betrieb der Schwungradspeichereinheiten unvorteilhafte Drehzahl entladen werden.

In einer Ausführungsform umfasst jede Schwungradspeichereinheit einen elektromechanischen Wandler, der elektrisch über eine Motorregelung an den Gleichspannungszwischenkreis angeschlossen ist. Vorzugsweise ist die Motorregelung ein Frequenzumrichter. Der elektromagnetische Wandler wird im Folgenden auch als Motor bezeichnet. Die Motorregelung ist über Datenleitungen mit der Modulsteuereinheit zum Erhalt von Sollwertvorgaben (beispielsweise Drehmomentvorgaben) verbunden und kann dabei im Rahmen ihrer Strom- und Leistungsbegrenzungen beliebige Strombeiträge aus dem Gleichspannungszwischenkreis beziehen (laden, Energie aufnehmen) beziehungsweise an den Gleichspannungszwischenkreis abgeben (entladen, Energie abgeben). Alle Komponenten des Gleichspannungskreises sind dabei so ausgelegt, dass eine gegenseitige Beeinflussung, wie beispielsweise ein Kurzschluss oder ein Aufschwingen des Gleichspannungszwischenkreises, ausgeschlossen ist.

In einer weiteren Ausführungsform sind die Motorregelungen aller Schwungradspeichereinheiten dazu vorgesehen, die Gleichspannung im Gleichspannungszwischenkreis kontinuierlich gegen den oberen Schwellwert zu überwachen und spätestens bei einer Überschreitung des oberen Schwellwertes selbsttätig jeglichen Leistungsfluss aus den Schwungradspeichereinheiten in den Gleichspannungszwischenkreis zu unterbinden. Trotz der Regelung auf eine möglichst konstante Gleichspannung im Gleichspannungszwischenkreis können aufgrund besonderer externer Netzzustände (Störfall), beispielsweise eine kurzfristige hohe Menge an in ein Wechselstromnetz aus anderen Quellen außerhalb des Energiespeichermoduls eingespeiste Energie, eine zu hohe Gleichspannung im Gleichspannungszwischenkreis auftreten. Bei gerade ausgeführten Regel- und Systemaufgaben, die zu einer Einspeisung von Energie aus dem Energiespeichermodul in das externen Stromnetz führen würden, würde die Gleichspannung im Gleichspannungszwischenkreis möglicherweise über ein kritisches Spannungsniveau ansteigen, wenn das oder die angeschlossenen externen Netze diese Energie nicht wie unter Normalbedingungen als Senke abnehmen könnten, da sie selber gerade eine Energiequelle darstellen. Daher unterbrechen (unterbinden) zum Anlagenschutz die Motorregelungen der einzelnen Schwungradspeichereinheiten die Einspeisung von Energie selbstständig unabhängig von anstehenden Regel- und Systemaufgaben. Die Unterbindung jeglichen Leistungsflusses aus den Schwungradspeichereinheiten in den Gleichspannungszwischenkreis kann auch ohne Überschreitung des oberen Schwellwertes bei einer zu starken Annäherung der Gleichspannung an den oberen Schwellwert erfolgen, beispielsweise wenn die Differenz zwischen Gleichspannung in Gleichspannungszwischenkreis und oberem Schwellwert unter einen in der Motorsteuerung definierten kritischen Wert fällt.

In einer weiteren Ausführungsform ruft die Modulsteuereinheit aktuelle Drehzahlen der einzelnen Schwungradspeichereinheiten aus deren Motorregelungen ab und bestimmt einen jeweiligen aktuellen Ladezustand der einzelnen Schwungradspeichereinheiten aus der abgerufenen Drehzahl. Die möglichen Drehzahlen können zwischen einer maximalen und einer minimalen Drehzahl (im Extremfall keine Drehung) variieren, wobei der Ladezustand bei maximaler Drehzahl 100 % beträgt. Somit ergibt sich der aktuelle Ladezustand aus der jeweils aktuellen Drehzahl. Mit Kenntnis der aktuellen Ladezustände kann die Modulsteuereinheit genau die verfügbare Menge an Energie und Leistung zur Einspeisung in das oder die externen Spannungsnetze beziehungsweise die freie Speicherkapazität für zusätzlich aufzunehmende Mengen an Energie aus dem oder den externen Spannungsnetzen für die Ausführung der Regel- und Systemaufgaben für die jeweiligen (individuellen) Drehmonentvorgaben zugrunde legen und entsprechend die Drehmomentvorgaben auf den jeweiligen Ladezustand der individuellen Schwungradspeichereinheiten geeignet anpassen. Der Abruf der Drehzahlen kann dabei periodich, beispielsweise mit einer Frequenz von 1 Hz, erfolgen. Die aktuelle Drehzahl kann dabei als Reaktion auf ein entsprechendes aktives Abrufsignal, ausgesendet durch die Modulsteuereinheit, erfolgen oder durch die Motorregelungen selbständig erfolgen (passiver Abruf durch die Modulsteuereinheit). Die selbständige Übermittlung durch die Motorregelung kann kontinuierlich erfolgen oder lediglich nach einer Änderung der Drehzahl um einen vorher festgelegten Wert. Ein typischer Drehzahlbereich im Normalbetrieb ist bespielsweise 300Hz - 800Hz mit ±5% als zulässiger Toleranzbereich.

In einer Ausführungsform sind in der Motorregelung der Schwungradspeichereinheiten eine obere Drehzahlbegrenzung und/oder eine untere Drehzahlbegrenzung implementiert. Diese vor Ort (in den Schwungradspeichereinheiten) vorhandene Drehzahlbegrenzung dient dem Maschinenschutz vor einer Überladung der Schwungradspeichereinheit oder als Tiefentladungsschutz. In einer bevorzugten Ausführungsform ist die obere Drehzahlbegrenzung und/oder untere Drehzahlbegrenzung durch ein Bauteil, bespielsweise ein Mikrokontroller, implementiert. Die Drehzahlbegrenzung kann aber auch mit einem Softwareprogramm in der Motorsteuerung implementiert sein. Eine so genannte hardwaremäßige Installation durch das zusätzliche Bauteil garantiert die Funktionstüchtigkeit der Drehzahlbegrenzungen unabhängig vom Funktionszustand der Motorregelung. In gleicher Weise sind in der Motorregelung hardwareseitig durch geeignete Maßnahmen Begrenzungen für maximale Drehmomente bzw. Strombeiträge in oder aus dem Gleichspannungszwischenkreis vorgesehen.

In einer weiteren Ausführungsform sind in der Modulsteuereinheit obere Drehzahlbegrenzungen und/oder untere Drehzahlbegrenzungen für die Drehmomentvorgaben implementiert. In einer bevorzugten Ausführungsform sind die Drehzahlbegrenzungen als Anweisung in einem Computerprogramm implementiert, damit gegebenenfalls veränderte Drehzahlbegrenzungen schnell ausgeführt werden können. Die Drehzahlbegrenzungen in der Modulsteuereinheit brauchen nicht dieselben Drehzahlbegrenzungen wie in den Motorregelungen zu sein. Letztere dienen dem Maschinenschutz. Die Drehzahlbegrenzungen in der Modulsteuereinheit können dagegen zu einer Steuerung des Energiespeichemoduls in einem besonders effektiven Drehzahlbereich dienen. Die oberen/unteren Drehzahlbegrenzungen in der Modulsteuereinheit liegen dabei bei Werten nicht höher/niedriger als die obere/untere Drehzahlbegrenzung in den Motorregelungen. Die Drehzahlbegrenzungen bzw. maximalen Drehmomente und Ströme in den Motorregelungen werden in dieser Ausführungsform von der Modulsteuereinheit bei der Berechnung der zu übermittelnden Drehmomentvorgaben berücksichtigt.

In einer weiteren Ausführungsform umfasst das Energiespeichermodul ein oder mehrere Messeinheiten zur kontinuierlichen Messung der Spannungsqualität des oder der externen Spannungsnetze. Durch die Überwachung des Spannungsnetzes anhand der kontinuierlichen Messung kann das Energiespeichermodul beim Über- oder Unterschreiten festgelegter Grenzwerte in dem oder den externen Spannungsnetzen das Energiespeichermodul aktiv vom jeweiligen externen Spannungsnetz trennen. Die Messeinheiten können dabei im lokalen und/oder nicht-lokalen externen Spannungsnetz integriert oder an einer oder mehreren Stellen am lokalen externen Spannungsnetz angeordnet sein. Die Messeinheiten können auch am Verbindungspunkt zwischen dem Energiespeichermodul und den lokalen und/oder nicht-lokalen externen Spannungsnetzen angeordnet sein. Messeinheiten im Rahmen der vorliegenden Erfindung sind beispielsweise Messsonden zur Messung der Netzfrequenz und Netzspannung als Beispiel für relevante Daten für das angeschlossene lokale Stromnetz. Weitere Messgrößen sind beispielsweise der Spannungsverlauf als Funktion der Zeit, der Phasenwinkel, der Sternpunkt, die Netzfrequenz, der Netzstrom und andere Größen. Der Fachmann kann im Rahmen der vorliegenden Erfindung geeignete Messeinheiten oder Messsonden auswählen und an der geeigneten Position anordnen. Sei beispielsweise die gewünschte Netzfrequenz eines externe Wechselspannungsnetzes 50 Hz und stellen die Messeinheiten ein Absinken der Netzfrequenz fest, so wird die Modulsteuereinheit automatisch auf Basis der aktuellen gemessenen Netzfrequenz (als gemessene relevante Daten) und einer in der Modulsteuereinheit hinterlegten Reaktionsfolge Energie in das betreffende externe Wechselspannungsnetz einspeisen, bis die Netzfrequenz wieder auf dem gewünschten Wert liegt. Weitere Beispiele sind die Messung des Phasenwinkels in einem lokalen Wechselspannungsnetz, um eine entsprechende Blindleistungskompensation bereitzustellen, oder die Spannungsmessung im Falle von zu viel oder zu wenig Lastabnahme im lokalen externen Spannungsnetz zum Erhalt der Spannungsqualität. Für andere Regel- und Systemaufgaben sind entsprechende andere Reaktionsfolgen in der Steuerung hinterlegt.

In einer weiteren Ausführungsform ist die Modulsteuereinheit dazu ausgestaltet, externe Daten zu empfangen und die Drehmomentvorgaben auf die empfangenen externen Daten anzupassen, vorzugsweise sind solche externe Daten physikalische Messgrößen, logische Größen, Echtzeit-Steuerkommandos oder Steuerkommandos zur Ablaufsteuerung. Dem Betriebsplan können beispielsweise externe Daten (Steuerbefehle) bezüglich der ortsgebundenen und nicht-ortsgebundenen Regel- und Systemaufgaben zugrunde liegen. Des Weiteren ist die Modulsteuereinheit in der Lage, auf sich verändernde Verhältnisse im lokalen externen Spannungsnetz entsprechend zu reagieren und mittels Energieeinspeisung oder Energieaufnahme die Netzqualität des lokalen externen Spannungsnetzes zu erhöhen oder konstant zu halten oder bei einer Störung im lokalen externen Spannungsnetz die Netzqualität wieder zu verbessern. Die empfangenen externen Daten (Steuerbefehle), im Folgenden auch als Anweisungen bezeichnet, entsprechen den ortsgebundenen und/oder nicht-ortsgebundenen Regel- und Systemaufgaben für das Energiespeichermodul, die von der Modulsteuereinheit entsprechend ausgeführt werden. Der Begriff "ausführen" bezeichnet hierbei das Steuern des Energiespeichermoduls durch die Modulsteuereinheit gemäß den vorliegenden Steuerbefehlen (externen Daten) zu den ortsgebundenen und nicht-ortsgebundenen Regel- und Systemaufgaben für die angeschlossenen Stromnetze. Die externen Daten werden beispielsweise von einer externen Steuereinheit übermittelt, die beispielsweise den Bedarf von Regelenergie für das nicht-lokale Wechselspannungsnetz (Stromnetz) regelt und diesen Bedarf im Rahmen der freien (nicht für ortsgebundene Regel- und Systemaufgaben benötigte) Kapazitäten des Energiespeichermoduls in Form von nicht-ortsgebundenen Regel- und Systemaufgaben von dem Energiespeichermodul über das Kommunikationsnetz anfordern kann. Weitere externe Systeme, von denen das Energiespeichermodul nicht-ortsgebundene Regel- und Systemaufgaben empfangen könnte, wären beispielsweise ein Leistungsstützungsverbund oder eine Strombörse, anhand derer Einspeisungen oder Energieabnahmen in bestimmten Betriebszeiten entsprechend günstig sind. Weitere externe Größen für nicht-ortsgebundene Regel- und Systemaufgaben sind beispielsweise der Blindleistungsbedarf, eine Spitzenlastkompensation oder benötigter lokaler Speicherbedarf im nicht-lokalen Wechselspannungsnetz (Stromnetz).

Der Begriff "Empfangen" bezeichnet alle Arten von Vorgängen, bei denen externe Daten zum Energiespeichermodul hin übertragen werden. Diese externen Daten sind beispielsweise Steuerbefehle, auf deren Basis die Modulsteuereinheit das Energiespeichermodul steuert. Die externen Daten werden von externen Systemen übermittelt, beispielsweise Steuerungssysteme des lokalen Wechselspannungsnetzes (Stromnetzes), eine übergeordnete Verbundsteuerung oder lokale Messstellen. Diese Steuerbefehle (externe Daten) umfassen die ortsgebundenen und nicht-ortsgebundenen Regel- und Systemaufgaben, die von dem erfindungsgemäßen Energiespeichermodul im Rahmen seiner Möglichkeiten ausgeführt werden. Die externen Daten (Steuerbefehle) können aber auch über eine Datenschnittstelle von einem Datenträger per Auslesen in einem entsprechenden Datenträgerlaufwerk (beispielsweise einer CD-ROM) oder über eine Datenträgerschnittstelle (beispielsweise von einem USB-Datenstick) empfangen werden. Alternativ können die externen Steuerbefehle auch per Direkteingabe über eine entsprechende Benutzerschnittstelle (Bildschirm und Tastatur) empfangen werden.

In einer Ausführungsform ist das Energiespeichermodul mit entsprechenden Schnittstellen dazu ausgestaltet, Betriebsdaten, die im erfindungsgemäßen Energiespeichermodul erzeugt wurden, nach extern auszusenden, damit die jeweiligen Betriebsdaten in den externen Systemen den von dort zu empfangenen Regel- und Systemaufgaben zugrunde gelegt werden können. Das Aussenden kann sich aber auch auf das Aussenden eines Testsignals zum Prüfen einer bestehenden Datenverbindung beziehen.

Zur Ausführung der Regel- und Systemaufgaben umfasst die Modulsteuereinheit in einer Ausführungsform ein Prioritätenmanagement zum Ausführen der einzelnen externen Daten (Steuerbefehle), wobei die Ausführung der externen Steuerbefehle bezüglich ortsgebundener Regel- und Systemaufgaben in dem oder den lokalen Wechselspannungsnetzen (Stromnetzen) Vorrang vor der Ausführung der externen Steuerbefehle bezüglich nicht-ortsgebundener Regel- und Systemaufgaben in dem nicht-lokalen Wechselspannungsnetz (Stromnetz) besitzt. Das Prioritätenmanagement kann als Datenspeicher ausgeführt sein, auf den die Modulsteuereinheit vor Ausführung der externen Steuerbefehle zurückgreift und die gemäß den gesetzten Prioritäten die nächsten externen Steuerbefehle ausführt. Die Prioritäten können dabei gegenüber einem externen Zugriff unveränderlich auf dem Datenspeicher gespeichert sein. Eine Änderung der Prioritäten kann beispielsweise durch Austausch des entsprechenden Datenspeichers oder der entsprechenden Datei mit dem Prioritätenmanagement vor Ort im Energiespeichermodul möglich sein.

In einer weiteren Ausführungsform ist die Modulsteuereinheit bei einem gestörten Empfang der externer Daten (Steuerbefehlen) dazu vorgesehen, über die Modulspeicherkapazität und Modulleistung ausschließlich zur Ausführung ortsgebundener Regel- und Systemaufgaben in dem oder den angeschlossenen lokalen externen Spannungsnetzen (Stromnetzen) zu verfügen, bis der Empfang externer Daten wieder möglich ist. Zur Feststellung einer Störung des Datenempfangs kann dabei die Modulsteuereinheit periodisch Testsignale nach extern aussenden und das Fehlen eines entsprechenden Rücksignals als Verifikation einer Störung des Empfangs verarbeiten. Ein solches Testsignal ist beispielsweise ein so genannter digitaler Handschlag, über den das Bestehen der Kommunikationsverbindung geprüft wird. Die Bevorzugung ortsgebundener Regel- und Systemaufgaben ist zweckmäßig, da nach einem Ausfall der Kommunikation nach extern die Modulsteuereinheit keine Rückmeldung mehr über den augenblicklichen Zustand des nicht-lokalen externen Spannungsnetzes (Stromnetzes) bekommt. Sofern die Modulsteuereinheit dann einfach die vorliegenden Aufgaben ohne weitere, zu empfangende externe Daten (Steuersignale) abarbeiten würde, könnte dies in besonderen Umständen sogar zu einem Ausfall des externen Spannungsnetzes (Stromnetzes) infolge von Überlastung führen. Daher ist es vorteilhaft, nur die ortsgebundenen Regel- und Systemaufgaben durchzuführen, zu denen das Energiespeichermodul verpflichtet ist und der die Zweckmäßigkeit dieser ortsgebundenen Aufgaben gegebenenfalls über eigene Messeinheiten selbst überwachen kann.

In einer weiteren Ausführungsform ist die Modulsteuereinheit dazu ausgestaltet, neben der Drehzahl weitere Betriebsdaten des Energiespeichermoduls zu erfassen, auszuwerten und ein Meldeprotokoll, umfassend die Betriebsdaten über eine der Datenschnittstellen, nach extern auszusenden, beispielsweise zu entsprechenden externen Leitystemen oder externen Steuereinheiten, von denen das Energiespeichermodul die externen Daten erhält. Damit können im externen Leitsystem (oder Steuereinheiten) zumindest die Betriebsdaten für die zu empfangenden externen Daten (Steuerbefehle) berücksichtigt werden. Die Betriebsdaten des Energiespeichermoduls geben beispielsweise an, welche Modulspeicherkapazität und Modulleistung vorliegt und welche (momentane) freie nicht-lokale Kapazität (die Modulspeicherkapazität, die nicht für die ortsgebundenen Regel- und Systemaufgaben benötigt wird) und (momentane) freie nicht-lokale Leistung (die Modulleistung, die nicht für die ortsgebundenen Regel- und Systemaufgaben benötigt wird) das Energiespeichermodul für nicht-ortsgebundene Aufgaben hat und/oder welche ortsgebundenen Regel- und Systemaufgaben in Zukunft geplant sind. Die Betriebsdaten können dabei von der Modulsteuereinheit über Betriebssensoren selber gemessen werden, oder die Betriebsdaten werden von anderen Modulen über entsprechende Datenleitungen übermittelt. Die auf diese Weise erfassten Betriebsdaten werden nach einem in der Modulsteuereinheit abgelegten Schema von der Modulsteuereinheit ausgewertet, beispielsweise durch ein entsprechendes Softwareprogramm, und als Betriebsdaten in einem vorher festgelegten Format über die voranstehend beschriebenen Datenschnittstellen ausgesendet. Die Aussendungen der Betriebsdaten erfolgt je nach Anforderung der Anwendung beispielsweise sekündlich. Die Modulsteuereinheit erfasst beispielsweise die Ist-Werte der Speicherzustände der einzelnen Schwungradspeichereinheiten, die Zustände der angeschlossenen Stromnetze (beispielsweise Spannung und Strom) und verrechnet diese Daten zur Ausführung der ortsgebundenen und nicht-ortsgebundenen Regel- und Systemaufgaben. Das Meldeprotokoll kann beispielsweise zusätzlich zu den Betriebsdaten die Identität des Energiespeichermoduls in Form einer charakteristischen Bezeichnung, wie einer Kennnummer und möglicherweise den Ort, an dem das Energiespeichermodul aufgestellt ist, in Form von Geokoordinaten umfassen. Das Meldeprotokoll hat dabei ein geeignetes, bespielsweise verschlüsseltes Datenformat, um von den gewünschten externen Stellen empfangen und verarbeitet werden zu können. Die ausgesendeten Betriebsdaten inklusive der Information über Ist- und Plandaten von freien Modulspeicherkapazitäten und freien Modulleistungen können dann von einer externen Leitsteuerung (oder externen Steuereinheit) empfangen, entschlüsselt und entsprechend verplant werden und anschließend entsprechende anlagenspezifische nicht-ortsgebundene oder ortsgebundenen Regel- und Systemaufgaben in Form von externen Daten (Steuerbefehlen) an das Energiespeichermodul zurück übermittelt werden.

In einer weiteren Ausführungsform umfasst das Energiespeichermodul des Weiteren Nebenaggregate zum Betrieb der Schwungradspeichereinheiten, und die Modulsteuereinheit ist dazu ausgestaltet, eine Steuerung der Nebenaggregate auf empfangene interne Betriebsdaten oder externe Daten hin anzupassen. Vorzugsweise umfassen die internen Betriebsdaten dabei thermische Lasten innerhalb des Energiespeichermoduls wie von den Schwungradspeichereinheiten oder von weiteren modulinternen Systemen. Weitere modulinterne Systeme sind beispielsweise ein Vakuumsystem, ein Heiz- oder Kühlsystem oder andere Versorgungssysteme. Damit wird der Wirkungsgrad des Energiespeichermoduls erhöht. Die internen elektrischen Verluste können durch die gezielte Beeinflussung des Betriebsverhaltens oder des Betriebspunktes der Nebenaggregate in Abhängigkeit anlageninterner oder externer aktueller Messgrößen minimiert werden. Beispielsweise kann die Vorlauftemperatur einer Kältemaschine als ein Beispiel eines Nebenaggregats erhöht oder gesenkt werden, je nach aktuellen internen/ externen Lasten. Beispielsweise kann eine reduzierte Abwärme der Schwungradspeichereinheiten zu einer Reduzierung der Kälteleistung der Kältemaschine genutzt werden, was Betriebsenergie für die Kältemaschine einspart. In einem anderen Beispiel kann die Leistung einer Vakuumpumpe zur Erzeugung eines Betriebsvakuums in den Schwungradenergiespeichern in Abhängigkeit des Innendrucks der Energiespeicher getaktet betrieben oder gar ganz abgeschaltet werden. Derartige Massnahmen sparen Betriebsenergie und erhöhen damit den Wirkungsgrad und ermöglichen damit die Bereitstellung eines effektiveren Energiespeichermoduls.

In einer weiteren Ausführungsform umfasst das Energiespeichermodul zusätzlich ein oder mehrere mit den Nebenaggregaten verbundene Leistungssenken. Damit wird eine weitere Aufnahme von zusätzlicher Energie bei voll geladenen Schwungradspeichereinheiten ermöglicht. Beispielsweise kann die Kapazität des Energiespeichermoduls zur Aufnahme externer elektrischer Leistung (beispielsweise Primär- oder Sekundärregelleistung aus einem der Wechselspannungsnetze) durch gezielte Nutzung einer Kühlanlage mit primärem und sekundärem Kühlkreislauf dadurch erhöht werden, dass der sekundäre Kühlkreislauf der Kühlanlage gleichzeitig durch den primären Kreislauf gekühlt und elektrisch geheizt wird, beispielsweise mit einem Tauchsieder im Vorratsbehälter als erste Leistungssenke, was eine erhöhte Kühlleistung des Primärkühlkreislaufs zur Folge hat (erhöhte Leistungsaufnahme der Kältemaschine als zweite Leistungssenke). Die Erhöhung der Modulspeicherkapazität über die nominelle Summe der Einheitenspeicherkapazitäten der einzelnen Schwungradspeichereinheiten hinaus kann je nach Umweltbedingungen oder Anlagenbetriebspunkt durch die (elektrische) Leistungsaufnahme von Kühlsystem und/oder Vakuumsystem bewusst über das für einen Normalbetrieb notwendige Maß erhöht werden. Eine derart vorgehaltene Kältemenge beziehungsweise das zusätzlich erreichte Vakuumlevel unterhalb eines Sollvakuums kann zu einem späteren Zeitpunkt mittels nicht betriebener Nebenaggregate und der damit verbundenen Einsparung von Betriebsenergie abgerufen und somit eingespart werden, wenn erhöhter Bedarf gefordert ist.

Die Erfindung betrifft des Weiteren ein Verfahren zum Steuern des Energiespeichermoduls umfassend mehrerer Schwungradspeichereinheiten, mindestens ein Regelsystem und mindestens eine Modulsteuereinheit, wobei die Schwungradspeichereinheiten elektrisch parallel über einen gemeinsamen Gleichspannungszwischenkreis verbunden sind und das Regelsystem mit einer Ausgangsseite mit dem gemeinsamen Gleichspannungszwischenkreis und mit einer Eingangsseite mit mindestens einem überregionalen Wechselspannungsnetz als eines der externen Spannungsnetze verbunden und dazu vorgesehen ist, die Gleichspannung im Gleichspannungszwischenkreis zwischen einem oberen Schwellwert und einem unteren Schwellwert im Wesentlichen konstant zu halten, umfassend die Schritte:
- Regeln des Energieflusses zwischen dem überregionalen Wechselspannungsnetz als angeschlossenes externes Spannungsnetz und den Schwungradspeichereinheiten zur Ausführung von nicht-ortsgebundenen Regel- und Systemaufgaben in dem überregionalen Wechselspannungsnetz in einer von der Modulsteuereinheit vorgegebenen Weise mittels:
- Übermitteln einer Drehmomentvorgabe zum Beschleunigen der Schwungradspeichereinheiten durch die Modulsteuereinheit an die Schwungradspeichereinheiten bei einem Energiefluss zumindest aus dem überregionalen Wechselspannungsnetz heraus in den Gleichspannungszwischenkreis hinein oder
- Übermitteln einer Drehmomentvorgabe zum Abbremsen der Schwungradspeichereinheiten durch die Modulsteuereinheit an die Schwungradspeichereinheiten bei einem Energiefluss aus dem Gleichspannungszwischenkreis heraus zumindest in das überregionalen Wechselspannungsnetz hinein oder
- keine Übermittlung von Drehmomentvorgaben für die Schwungradspeichereinheiten bei keinem Energiefluss in den oder aus dem Gleichspannungszwischenkreis herein oder heraus.

### Kurze Beschreibung der Abbildungen

Diese und andere Aspekte der Erfindung werden im Detail in den Abbildungen wie folgt gezeigt:
- Fig.1:: eine Ausführungsform des erfindungsgemäßen Energiespeichermoduls;
- Fig.2:: eine Ausführungsform des Regelsystems mit Regelbox;
- Fig.3:: eine Ausführungsform des erfindungsgemäßen Verfahrens zum Betreiben des Energiespeichermoduls;
- Fig.4:: eine weitere Ausführungsform des erfindungsgemäßen Verfahrens zum Betreiben des Energiespeichermoduls;

### Detaillierte Beschreibung der Ausführungsbeispiele

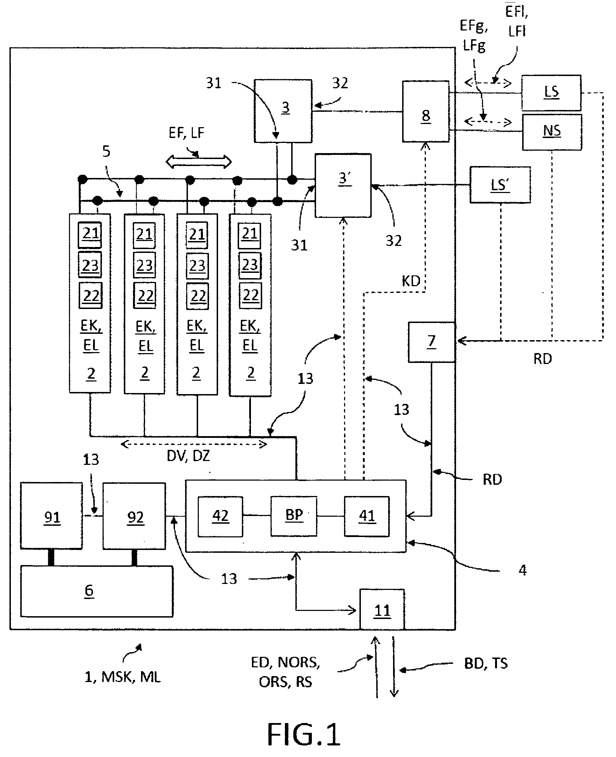

Fig. 1 zeigt eine Ausführungsform des erfindungsgemäßen Energiespeichermoduls 1 zur reversiblen Speicherung von elektrischer Energie in Form von mechanischer Rotationsenergie, das hier vier Schwungradspeichereinheiten 2 mit jeweiligen Einheitenspeicherkapazitäten EK und Einheitenleistungen EL umfasst. Diese geringe Anzahl wurde aus Übersichtsgründen in der schematischen Darstellung gewählt. Für die reale Anwendung umfasst ein Energiespeichermodul beispielsweise dreißig Schwungradspeichereinheiten 2. In dieser Auslegungsform würden sich mit den oben aufgeführten Einzelkapazitäten pro Schwungradenergiespeicher eine maximale Speicherkapazität von 150 kWh und eine maximale Leistung von 0,6 MW pro Energiespeichermodul ergeben. Jede der Schwungradspeichereinheiten 2 umfasst einen elektromagnetischen Wandler 23, der elektrisch über eine Motorregelung 21, vorzugsweise einen Frequenzumrichter 21, an den Gleichspannungszwischenkreis 5 angeschlossen ist. Der Gleichspannungszwischenkreis 5 dient dazu, dass alle Schwungradspeichereinheiten 2 elektrisch parallel zueinander angeschlossen werden können, damit sich die Einheitenspeicherkapazitäten EK und Einheitenleistungen EL zu einer Modulspeicherkapazität MSK und Modulleistung ML aufaddieren können und eine fehlerhafte Schwungradspeichereinheit nicht die Funktionstüchtigkeit des gesamten Energiespeichermoduls 1 in Frage stellt. Der Gleichspannungszwischenkreis ist mit einem Regelsystem 3 mit dessen Ausgangsseite 31 verbunden. Die Eingangsseite 32 des Regelsystems 3 ist mit einem externen lokalen Spannungsnetz LS und mit einem nicht-lokalen Spannungsnetz NS verbunden. Die Modulsteuereinheit 4 steuert das Energiespeichermodul 1 durch Drehmomentvorgaben DV (vorzugsweise zeitbezogene Drehmomentvorgaben), die die Modulsteuereinheit 4 generiert und an die Schwungsradspeichereinheiten 2 beim Betrieb des Energiespeichermoduls 1 übermittelt U1. Aufgrund der Drehmomentvorgaben DV speisen die Schwungradspeichereinheiten 2 Energie in Form von Strom in den Gleichspannungzwischenkreis 5 ein oder entnehmen Energie in Form von Strom aus dem Gleichspannungszwischenkreis 5. Hierbei regelt das Regelsystem 3 die Gleichspannung DC im Gleichspannungszwischenkreis 5 durch Abgabe (Ep) von Energie in zumindest eines der beiden externen Spannungsnetze LS, NS oder durch Aufnahme En von Energie aus zumindest einem der beiden externen Spannungsnetze LS, NS zwischen einem oberen Schwellwert SW1 (Soll-Gleichspannung + 5 V) und einem unteren Schwellwert SW2 (Soll-Gleichspannung -5 V) so, dass die Gleichspannung DC im Wesentlichen konstant auf einem Wert von beispielsweise 750 V bleibt. In dieser Ausführungsform ist neben dem Regelsystem 3, das die Gleichspannung DC im Gleichspannungszwischenkreis 5 zwischen den oberen und unteren Schwellwerten SW1, SW2 konstant hält (ursprüngliches Regelsystem), ein weiteres Regelsystem 3' als zusätzliches Regelsystem 3' parallel zum ursprünglichen Regelsystem 3 mit dem Gleichspannungszwischenkreis 5 verbunden. Dieses zusätzliche Regelsystem 3' ist hier mit einem weiteren lokalen Spannungsnetz LS' verbunden, wobei das lokale Stromnetz LS' z.B. ein Inselnetz darstellt, das nicht mit den anderen Stromnetzen LS, NS verbunden ist, beispielsweise ein Stromnetz für ein Gebäude. Das zusätzliche Regelsystem 3' führt damit einen Inselbetrieb (Inselsteuerung beziehungsweise Inselversorgung) für das Inselnetz LS' durch. Dies bietet den Vorteil, dass das ursprüngliche Regelsystem 3 die Aufschaltebedingungen der externen Spannungsnetze LS, NS ohne Einschränkungen einhalten und ausführen kann, während das zusätzliche Regelsystem 3' z.B. hiervon abweichende Grid-Codes für das Inselnetz LS' ausführen kann. Für die Ausführung der ortsgebundenen Regel- und Systemaufgaben ORS im Inselnetz LS' ist die Modulsteuereinheit 4 mit dem zusätzlichen Regelsystem 3' über eine Datenleitung 13 verbunden (gestrichelter Pfeil). Für die Steuerung ruft die Modulsteuereinheit 4 die Drehzahlen DZ der einzelene Schwungradspeichereinheiten 2 aus deren Motorregelung 21 ab und bestimmt einen jeweiligen aktuellen Ladezustand der einzelnen Schwungradspeichereinheiten 2 aus der abgerufenen Drehzahl DZ. Aus Maschinenschutzgründen sind in den jeweiligen Motorregelungen 21 der Schwungradspeichereinheiten 2 eine obere Drehzahlbegrenzung und/oder eine untere Drehzahlbegrenzung implementiert, wobei hier die Drehzahlbegrenzungen durch ein Bauteil 22 implementiert sind. Die Drehzahlbegrenzungen können alternativ oder zusätzlich auch in der Modulsteuereinheit 4 implementiert sein. Vorzugsweise sind die Drehzahlbegrenzungen in der Modulsteuereinheit 4 als Anweisung in einem Computerprogramm implementiert. Die untere Drehzahlgrenze ist minimal 0 Umdrehungen/s wobei es technisch sinnvoll sein kann, eine höhere Minimaldrehzahl zu wählen, damit das Motorsystem eine aus betriebstechnischen Gründen notwendige Mindestleistung liefern kann. Nach oben hin ist die Drehzahl entweder durch die Motorumrichterfrequenz begrenzt oder durch die Festigkeiten der Rotorbauteile begrenzt. Typisch sind Maximaldrehzahlen von zum Bespiel 800Hz.

Die Modulsteuereinheit 4 steuert das Energiespeichermodul 1 aufgrund von ortsgebundenen und nicht-ortsgebundenen Regel- und Systemaufgaben ORS, NORS, die in den jeweiligen lokalen und nicht-lokalen Wechselspannungsnetzen LS, NS ausgeführt werden. Die ortsgebundenen und nicht-ortsgebundenen Regel- und Systemaufgaben ORS, NORS empfängt EM die Modulsteuereinheit 4 in Form von externen Daten ED über eine Datenschnittstelle 11. Die an die Schwungradspeichereinheiten 2 zu übermittelnden Drehmomentvorgaben DV werden auf Basis der empfangenen EM externen Daten ED von der Modulsteuereinheit 4 generiert. Externe Daten ED sind beispielsweise ortsgebundene und nicht-ortsgebundene Regel- und Systemaufgaben, physikalische Messgrößen, logische Größen, Echtzeit-Steuerkommandos oder Steuerkommandos zur Ablaufsteuerung. Die Modulsteuereinheit 4 umfasst des Weiteren einen Speicher 41 zur Speicherung der externen Daten ED, insbesondere der ortsgebundenen und nicht-ortsgebundenen Regel- und Systemaufgaben ORS, NORS. Außerdem umfasst die Modulsteuereinheit 4 hier ein Prioritätsmanagement 42. Zur Steuerung des Energiespeichermoduls 1 erstellt die Modulsteuereinheit 4 einen Betriebsplan BP zur Ausführung der ortsgebundenen und nicht-ortsgebundenen Regel- und Systemaufgaben ORS, NORS in den angeschlossenen lokalen und nicht-lokalen Spannungsnetzen LS, NS und übermittelt entsprechende Drehmomentvorgaben DV an die jeweiligen Schwungradspeichereinheiten 2, bevorzugt sind die Drehmomentvorgaben DV individuell auf die jeweiligen Ladezustände der einzelnen Schwungradspeichereinheiten 2 angepasst. Damit die Modulsteuereinheit 4 immer aktuelle externe Daten ED zur Steuerung des Energiespeichermoduls 1 erhält, prüft die Modulsteuereinheit 4 in dieser Ausführungsform die bestehende Kommunikationsverbindung nach extern auf ihre Funktionstüchtigkeit mittels Aussenden eines Testsignals TS, aufgrund dessen ein externes System ein entsprechendes Rücksignal RS zurücksendet. Der Empfang EM des Rücksignals belegt die Funktionstüchtigkeit der Kommunikationsverbindung zu diesem externen System, von dem das Energiespeichermodul beispielsweise seine auszuführenden ortsgebundenen und nicht-ortsgebundenen Regel- und Systemaufgaben ORS, NORS als externe Daten ED erhält. Damit diese externen Daten ED den aktuellen Zustand des Energiespeichermoduls 1 berücksichtigen, sendet die Modulsteuereinheit 4 die Betriebsdaten BD des Energiespeichermoduls 1 beispielsweise periodisch an das externe System. Die Betriebsdaten BD können dabei die Ladezustände der Schwungradspeichereinheiten 2 und damit die momentane und die im Prinzip verfügbare Modulspeicherkapazität MSK und Modulleistung ML, die Identität des Energiespeichermoduls 1 oder auch den Zustand anderer Komponenten des Energiespeichermoduls 1 umfassen.

Damit der Energie- und Leistungsfluss EF, LF, der in oder aus dem Gleichspannungszwischenkreis 5 zu/von den Wechselstromnetzen fließt, für die jeweiligen lokalen und nicht-lokalen Wechselstrom netzen LS, NS geeignet zur Erfüllung der jeweiligen ortsgebundenen Regel- und Systemaufgaben ORS im lokalen Wechselspannungsnetz LS und die nicht-ortsgebundenen Regel- und Systemaufgaben NORS im nicht-lokalen Wechselspannungsnetz NS aufgeteilt werden können, umfasst das Energiespeichermodul 1 eine Regelbox 8, die den aus dem Gleichstromzwischenkreis 5 eingehenden gesamten Energie- und Leistungsfluss EF, LF in einen lokalen Energie- und Leistungsfluss EFI, LFI für das lokalen Wechselspannungsnetz LS und in einen --nicht-loKalen Energie- und Leistungsfluss EFg, LFg für das nicht-lokale Wechselspannungsnetz NS aufteilt. Zur optimalen Ausführung der Regel- und Systemaufgaben ORS, NORS in den angeschlossenen Wechselspannungsnetzen LS, NS umfasst das Energiespeichermodul 1 hier eine Messeinheit 7 zur kontinuierlichen Messung der Spannungsqualität des oder der Wechselspannungsnetze LS, NS, die die relevanten Daten zur Beurteilung der Spannungsqualität in den Wechselspannungsnetzen LS, NS misst. In anderen Ausführungsformen können auch mehrere Messeinheiten 7 verwendet werden. Geeignete Messgrößen zum Erhalt der relevanten Daten RD sind beispielsweise der Spannungsverlauf als Funktion der Zeit, der Phasenwinkel, der Sternpunkt, die Netzfrequenz, oder der Netzstrom. Der Fachmann kann im Rahmen der vorliegenden Erfindung geeignete Messeinheiten oder Messsonden auswählen und an der geeigneten Position anordnen. Das Energiespeichermodul 1 kann somit beim Überschreiten festgelegter Grenzwerte in dem oder den Wechselspannungsnetzen LS, NS aktiv den Anschluss an ein Wechselspannungsnetz LS, NS trennen.

Das Energiespeichermodul 1 umfasst des Weiteren Nebenaggregate 91, 92 zum Betrieb der Schwungradspeichereinheiten 2, wie beispielsweise ein Vakuumsystem 91, das mit den Rotorbehältern für die Rotoren (Schwungmassen) in den Schwungradspeichereinheiten 2 über ein Rohrsystem (hier aus Übersichtsgründen nicht dargestellt) verbunden ist, um in den Rotorbehältern das für ein möglichst verlustarmes Rotieren der Rotoren bei hohen Drehzahlen benötigte Vakuum von zum Beispiel kleiner 10⁻³ mbar bei Drehzahlen von größer 40000U/min. zu erzeugen. Ein weiteres Nebenaggregat ist eine Kühleinheit 92 zur Abfuhr von Betriebswärme aus dem Energiespeichermodul 1. Die Modulsteuereinheit 4 ist dazu ausgestaltet, die Steuerung der Nebenaggregate 91, 92 auf empfangene interne Betriebsdaten BD oder externe Daten ED hin anzupassen, daher sind die Nebenaggregate 91, 92 mit der Modulsteuerung 4 über Datenleitungen 13 verbunden. Die internen elektrischen Verluste können durch die gezielte Beeinflussung des Betriebsverhaltens oder des Betriebspunktes der Nebenaggregate 91, 92 in Abhängigkeit anlageninterner oder externer aktueller Messgrößen minimiert werden. Beispielsweise kann die Vorlauftemperatur einer Kältemaschine 92 als ein Beispiel eines Nebenaggregats erhöht oder gesenkt werden, je nach aktuellen internen/externen Lasten. Beispielsweise kann eine reduzierte Abwärme der Schwungradspeichereinheiten 2 zu einer Reduzierung der Kälteleistung der Kältemaschine 92 genutzt werden, was Betriebsenergie für die Kältemaschine 92 einspart. In einem anderen Beispiel kann die Leistung einer Vakuumpumpe im Vakuummodul 91 zur Erzeugung eines Betriebsvakuums in den Rotorbehältern für die Rotoren der Schwungradenergiespeicher 2 in Abhängigkeit des Ausgasverhaltens der Schwungmassen (Rotoren) getaktet betrieben oder gar ganz abgeschaltet werden. Derartige Maßnahmen sparen Betriebsenergie und erhöhen damit den Wirkungsgrad um bis zu 10% und ermöglichen damit die Bereitstellung eines effektiveren Energiespeichermoduls 1. Die Versorgung der Nebenaggregate 91, 92 mit Betriebsstrom ist aus Gründen der Übersichtlichkeit nicht in Figur 1 dargestellt.

In dieser Ausführungsform umfasst das Energiespeichermodul 1 zusätzlich eine mit den Nebenaggregaten 91, 92 (schwarz dargestellt) verbundene Leistungssenke 6. Mit der Leistungssenke 6 wird eine weitere Aufnahme von zusätzlicher Energie bei voll geladenen Schwungradspeichereinheiten 2 ermöglicht. Beispielsweise kann die Modulspeicherkapazität MSK des Energiespeichermoduls 1 zur Aufnahme externer elektrischer Leistung (beispielsweise Primär- oder Sekundärregelleistung aus einem der Wechselspannungsnetzen NS) durch gezielte Nutzung einer Kühlanlage 92 mit primärem und sekundärem Kühlkreislauf dadurch erhöht werden, dass der sekundäre Kühlkreislauf der Kühlanlage 92 elektrisch geheizt wird, beispielsweise mit einem Tauchsieder im Kühlflüssigkeits-Vorratsbehälter mit zum Beispiel 400l Volumen (beispielsweise ein Wasserbehälter) als erste Leistungssenke 6, was eine erhöhte Kühlleistung des Primärkühlkreislaufs zur Folge hat (erhöhte Leistungsaufnahme der Kältemaschine 92 als zweite Leistungssenke). Die Erhöhung der Modulspeicherkapazität MSK über die nominelle Summe der Einheitenspeicherkapazitäten EK der einzelnen Schwungradspeichereinheiten 2 hinaus kann je nach Umweltbedingungen oder Anlagenbetriebspunkt durch die (elektrische) Leistungsaufnahme von Kühlsystem 92 und/oder Vakuumsystem 91 bewusst über das für einen Normalbetrieb notwendige Maß erhöht werden. Die so gespeicherte Kältemenge beziehungsweise das zusätzlich erreichte Vakuumlevel unterhalb eines Sollvakuums von zum Beispiel 10⁻³ mbar kann zu einem späteren Zeitpunkt mittels nicht betriebener Nebenaggregate 91, 92 und der damit verbundenen Einsparung von Betriebsenergie abgerufen und somit eingespart werden, wenn erhöhter Bedarf gefördert ist.

Zur Steuerung des Energiespeichermoduls 1 sind die Modulsteuereinheit 4 und die einzelnen Komponenten des Energiespeichermoduls 1 über Datenleitungen 13, beispielsweise ein Datenbus 13, miteinander verbunden. Über die Datenleitung 13 zum Regelsystem 3 überträgt die Modulsteuereinheit 4 die Konfigurationsdaten KD zur Reglerfunktion der Regelbox 8.

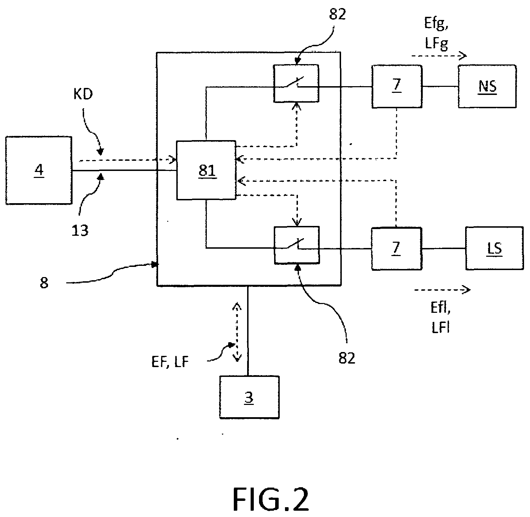

Fig. 2 zeigt eine Ausführungsform der Regelbox 8. Damit der Energie- und Leistungsfluss EF, LF zwischen den angeschlossenen Wechselspannungsnetzen (Stromnetzen) LS, NS und der Energiespeicheranlage 1 gemäß den Regel- und Systemaufgaben ORS, NORS aufteilen werden kann, umfasst das Energiespeichermodul 1 in dieser Ausführungsform eine Regelbox 8 mit einem Regelglied 81 und separate Trennschalter 82 für jedes der angeschlossenen Wechselspannungnetze (Stromnetze) LS, NS. Die Modulsteuereinheit 4 ist über eine Datenverbindung 13 mit dem Regelglied 81 der Regelbox 8 verbunden und übermittelt der Regelbox 8, hier direkt dem Regelglied 81, zur Steuerung der Energie- und Leistungsflüsse entsprechende Konfigurationsdaten der Reglerfunktion KD. Aufgrund der Konfigurationsdaten der Reglerfunktion KD steuert das Regelglied 81 die Verteilung des vom Gleichspannungszwischenkreis 5 eingehenden Energie- und Leistungsflusses EF, LF auf die angeschlossenen Wechselspannungsnetze (Stromnetze) LS, NS als Energiefluss EFI für das lokale Wechselspannungsnetz (lokale Stromnetz) LS und als Energiefluss EFg für das nicht-lokale Wechselspannungsnetz (nicht-lokale Stromnetz) NS. In diesem Ausführungsbeispiel ist lediglich exemplarisch die Verteilung des Energieflusses EF bei Einspeisung von Energie in beide angeschlossene Wechselspannungsnetze (Stromnetze) LS, NS gezeigt. Die Regelbox 8 ist gleichermaßen dafür ausgestaltet, einen Energiefluss aus einem der angeschlossenen Wechsel- oder Gleichspannungsnetz (Stromnetze) LS, NS und einen Energiefluss in das andere angeschlossene Wechsel- oder Gleichspannungsnetz (Stromnetz) NS, LS zu steuern, wobei je nach Größe der beiden Energieflüsse entweder der negative Energieüberschuss von der Energiespeicheranlage 1 gespeichert oder der positive Energieüberschuss von der Energiespeicheranlage 1 bereitgestellt wird. Die Energiespeicheranlage 1 ist hier nicht explizit gezeigt, sondern nur symbolisch über die entsprechenden Komponenten dargestellt. Die Regelbox 8 empfängt simultan die relevanten Daten RD aus beiden angeschlossenen Spannungsnetzen (Stromnetzen) LS, NS, woraus das Regelglied 81 das Vorhandensein der beiden angeschlossenen Spannungsnetze (Stromnetze) LS, NS mittels der in dem Regelglied 81 hinterlegten Kriterien oder Schwellwerte für die relevanten Daten RD ableitet. Sollte eines oder beide der angeschlossenen Spannungsnetze (Stromnetze) LS, NS aufgrund eines Netzausfalls nicht mehr zur Verfügung stehen, so manifestiert sich der Ausfall des jeweiligen Spannungsnetzes (Stromnetzes) LS, NS in den entsprechenden, an das Regelglied 81 übermittelten relevanten Daten RD, woraufhin das Regelglied 81 automatisch entsprechende Trenn-Anweisungen (gestichelter Pfeil) an den oder die betreffenden Trennschalter 82 zur Trennung der Energiespeicheranlage 1 von dem oder den angeschlossenen Wechselspannungsnetzen (Stromnetzen) LS, NS aussendet, woraufhin der oder die Trennschalter 82 das oder die vormals angeschlossenen Wechselspannungsnetze (Stromnetze) LS, NS von der Energiespeicheranlage 1 trennen. Die Trennung des angeschlossenen Wechselspannungsnetzes erfolgt dabei innerhalb weniger Millisekunden. Bei der Trennung von nur einem Wechselspannungsnetz bleibt die Energiespeicheranlage 1 weiterhin für die anderen noch weiterhin angeschlossenen Wechselspannungsnetze betriebsbereit. Damit kann bei Ausfall eines Wechselspannungsnetzes ein Kurzschluss oder eine Überlastsituation effektiv verhindert werden. Das hier gezeigte Ausführungsbeispiel mit einem angeschlossenen lokalen Wechselspannungsnetz (lokales Stromnetz) LS und einem angeschlossenen nicht-lokalen Wechselspannungsnetz (nicht-lokales Stromnetz) NS ist nur ein Bespiel für zwei angeschlossene Wechselspannungsnetze (Stromnetze). Die Regelbox 8 kann in anderen Ausführungsformen auch an mehr als zwei Wechselspannungsnetze (Stromnetze) angeschlossen sein. Die zwei oder mehr angeschlossenen Wechselspannungsnetze (Stromnetze) können auch jeweils lokale Wechselspannungsnetze (lokale Stromnetze) sein, von denen zumindest eines der lokalen Wechselspannungsnetze (lokale Stromnetze) mit dem nicht-lokalen Wechselspannungsnetz (nicht-lokales Stromnetz) zur Ausführung der nicht-ortsgebundenen Regel- und Systemaufgaben NORS verbunden ist.

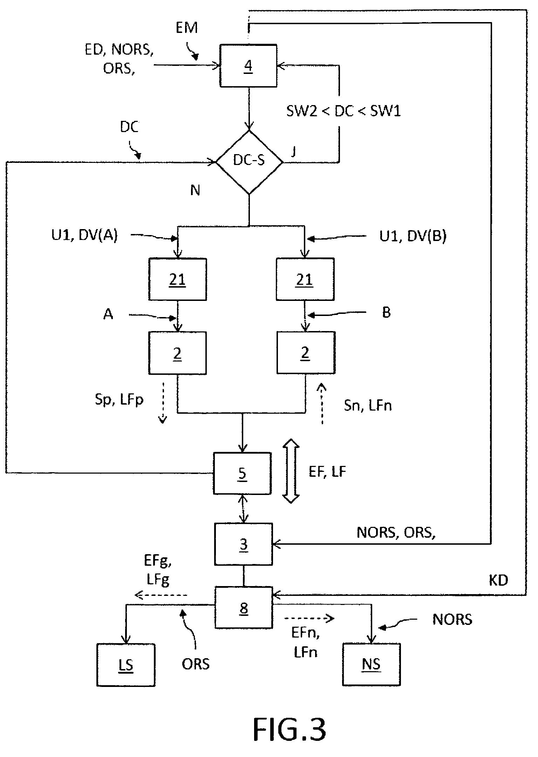

Fig. 3 zeigt eine Ausführungsform des erfindungsgemäßen Verfahrens zum Betreiben des Energiespeichermoduls 1. Die Modulsteuereinheit 4 empfängt ortsgebundene und nicht-ortsgebundene Regel- und Systemaufgaben ORS, NORS als externe Daten ED und prüft, ob die Gleichspannung DC des Gleichspannungszwischenkreises 5 dem Gleichspannungs-Sollwert DC-S entspricht. Ist dem so (DC-S = "J" entsprich SW2 < DC < SW1) und liegen keine anders lautenden Regel- und Systemaufgaben zur Einspeisung von Energie oder Entnahme von Energie in/aus den angeschlossenen Wechselspannungsnetzen LS, NS vor, dann besteht für die Modulsteuereinheit 4 kein Bedarf, Drehmomentvorgaben DV an die Schwungradspeichereinheiten zu übermitteln. Übersteigt die Gleichspannung DC den Gleichspannungs-Sollwert (DC-S = "N"), so wird eine Drehmomentvorgabe DV zum Beschleunigen B der Schwungradspeichereinheiten 2 durch die Modulsteuereinheit 4 an die Schwungradspeichereinheiten 2 bei einem Energiefluss EFp aus dem Wechselspannungsnetz LS, NS heraus in den Gleichspannungszwischenkreis 5 hinein übermittelt U1. Unterschreitet die Gleichspannung DC den Gleichspannungs-Sollwert (DC-S = "N"), so wird eine Drehmomentvorgabe DV zum Abbremsen A der Schwungradspeichereinheiten 2 durch die Modulsteuereinheit 4 an die Schwungradspeichereinheiten 2 bei einem Energiefluss EFn aus dem Gleichspannungszwischenkreis 5 heraus in das Wechselspannungsnetz LS, NS hinein übermittelt. Die Regelbox 8 regelt gemäß der Konfigurationsdaten für die Regelfunktion KD, die sie von der Modulsteuereinheit 4 erhält, die Energie- und Leistungsflüsse EF, LF, die sie von dem Regelsystem 3 erhält, in die Energie- und Leistungsflüsse EFI, LFI und EFg, LFg für jeweiligen Wechselspannungsnetze LS, NS gemäß den Anteilen nach den ortsgebundenen und nicht-ortsgebundenen Regel- und Systemaufgaben ORS, NORS.

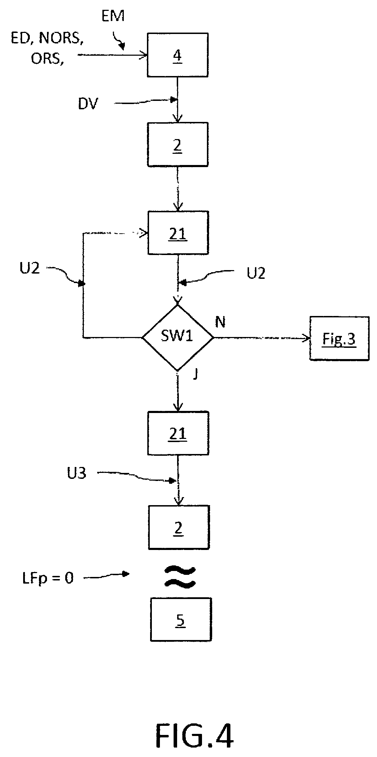

Fig.4 zeigt eine weitere Ausführungsform des erfindungsgemäßen Verfahrens zum Betreiben des Energiespeichermoduls 1. Die Modulsteuereinheit 4 empfängt EM ortsgebundene und nicht-ortsgebundene Regel- und Systemaufgaben ORS, NORS als externe Daten ED und übermittelt entsprechende Drehmomentvorgaben DV an die Schwungradspeichereinheiten 2. Die Motorregelungen 21 der einzelnen Schwungradspeichereinheiten 2 überwachen U2 unterdessen kontinuierlich die Gleichspannung DC im Gleichspannungszwischenkreis 5 gegen den oberen Schwellwert SW1, was durch den geschlossenen Pfeilkreis U2 dargestellt ist.. Spätestens bei einer Überschreitung des oberen Schwellwertes SW1 (SW1 = "J"), unterbinden U3 die Motorregelungen 21 aller Schwungradspeichereinheiten 2 jeglichen Leistungsfluss LFp aus den Energiespeichereinheiten 2 in den Gleichspannungszwischenkreis 5 (dargestellt als Schlangenlinie zwischen Kästchen z2" und Kästchen "5"). Obige Überprüfungen kann alternativ auch vom Regelsystem 3 durchgeführt werden. Die Folgeaktionen aufgrund einer Schwellwertverletzung bleiben dieselben wie oben beschrieben. Ist die Gleichspannung DC im Gleichspannungszwischenkreis 5 im Sollbereich S-DC oder wieder im Sollbereich, wird das Energiespeichermodul 1 gemäß den Steuerschritten nach Figur 3 weiter betrieben.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: erfindungsgemäßes Energiespeichermodul
- 11: Datenschnittstelle(n)
- 12: Messeinheit
- 13: Datenleitung, Datenbus
- 2: Schwungradspeichereinheit
- 21: Motorregelung
- 22: Bauteil
- 23: elektromagnetischer Wandler
- 3, 3': Regelsystem
- 31: Ausgangsseite
- 32: Eingangsseite
- 4: Modulsteuereinheit
- 41: Speicher
- 42: Prioritätenmanagement
- 5: Gleichspannungszwischenkreis
- 6: Leistungssenke
- 7: Messeinheit
- 8: Regelbox
- 81: Regelglied
- 82: Trennschalter
- 91, 92: Nebenaggregate

- A: Abbremsen der Schwungradspeichereinheiten
- B: Beschleunigen der Schwungradspeichereinheiten
- BD: Betriebsdaten
- DC: Gleichspannung im Gleichspannungszwischenkreis
- DC-S: Sollwert der Gleichspannung im Gleichspannungszwischenkreis
- DZ: Drehzahl
- DV: Drehmomentvorgabe
- ED: externe Daten
- EF: Energiefluss
- EFg: Energiefluss nicht-lokales Spannungsnetz
- EFI: Energiefluss lokales Spannungsnetz
- EFn: Energiefluss in das Energiespeichermodul oder die Schwungradspeichereinheiten hinein (negativer Energiefluss)
- EFp: Energiefluss aus dem Energiespeichermodul oder den Schwungradspeichereinheiten hinaus (positiver Energiefluss)
- EK: Einheitenspeicherkapazität
- EL: Einheitenspeicherleistung
- EM: Empfang von Daten
- En: Aufnahme von Energie aus dem Spannungsnetz
- Ep: Abgabe von Energie in das Spannungsnetz
- GSB: Gleichspannungsstützbetrieb
- KD: Konfigurationsdaten
- MSK: Modulspeicherkapazität
- LF: Leistungsfluss
- LFn: Leistungsfluss in das Energiespeichermodul oder die Schwungradspeichereinheiten hinein (negativer Leistungsfluss)
- LFp: Leistungsfluss aus dem Energiespeichermodul oder den Schwungradspeichereinheiten hinaus (positiver Leistungsfluss)
- LS, LS': lokales Spannungsnetz (lokales Stromnetz)
- NS: nicht-lokales Spannungsnetz (nicht-lokales Stromnetz)
- RD: relevante Daten
- Sn: Entnehmen von Energie / Leistung aus dem Gleichspannungszwischenkreis
- Sp: Einspeisen von Energie / Leistung in dem Gleichspannungszwischenkreis
- SW1: oberer Schwellwert für die Gleichspannung
- SW2: unterer Schwellwert für die Gleichspannung
- RS: Rücksignal
- TS: Testsignal
- U1: Übermitteln der Drehmomentvorgaben
- Ü2: kontinuierliches Überwachen der Gleichspannung im Gleichspannungszwischenkreis
- U3: Unterbinden jeglichen Leistungsflusses aus den Schwungradspeichereinheiten in den Gleichspannungszwischenkreis

## Patentansprüche

1. Ein Energiespeichermodul (1) zur reversiblen Speicherung von elektrischer Energie in Form von mechanischer Rotationsenergie, umfassend mehrere Schwungradspeichereinheiten (2), mindestens ein Regelsystem (3) und mindestens eine Modulsteuereinheit (4), wobei die Schwungradspeichereinheiten (2) elektrisch parallel über einen gemeinsamen Gleichspannungszwischenkreis (5) verbunden sind,
**dadurch gekennzeichnet,**
**dass** das Regelsystem (3) mit einer Ausgangsseite (31) mit dem gemeinsamen Gleichspannungszwischenkreis (5) und mit einer Eingangsseite (32) mit mindestens einem überregionalen Wechselspannungsnetz (NS) als eines der externen Spannungsnetze (LS, NS) verbunden ist und dazu ausgestaltet ist, den Energiefluss zwischen dem überregionalen Wechselspannungsnetz (NS) als angeschlossenes externes Spannungsnetz und den Schwungradspeichereinheiten (2) zur Ausführung von nicht-ortsgebundenen Regel- und Systemaufgaben in dem überregionalen Wechselspannungsnetz in einer von der Modulsteuereinheit vorgegebenen Weise mittels Übermittlung (U1) geeigneter Drehmomentvorgaben (DV) an die Schwungradspeichereinheiten (2) zur Abgabe (Ep) oder Aufnahme (En) von Energie an/aus dem Gleichspannungszwischenkreis (5) so zu regeln, dass die Gleichspannung (DC) bei Abgabe (Ep) von Energie zumindest in das überregionalen Wechselspannungsnetz und bei Aufnahme (En) von Energie zumindest aus dem überregionalen Wechselspannungsnetz zwischen einem oberen Schwellwert (SW1) und einem unteren Schwellwert (SW2) im Wesentlichen konstant bleibt.

2. Das Energiespeichermodul (1) nach Anspruch 1,
**dadurch gekennzeichnet,**
**dass** die Modulsteuereinheit (4) zur zeitbezogenen Generierung und Übermittlung (U1) der Drehmomentvorgaben (DV) für die Schwungradspeichereinheiten (2) vorgesehen ist, woraufhin die Schwungradspeichereinheiten (2) aufgrund der zeitbezogenen Drehmomentvorgaben (DV) Strom in den Gleichspannungszwischenkreis (5) einspeisen (Sp) oder entnehmen (Sn).

3. Das Lnergiespeichermodut (T) nach Anspruch 2,
**dadurch gekennzeichnet,**
**dass** jede Schwungradspeichereinheit (2) individuelle Drehmomentvorgaben (DV) von der Modulsteuereinheit (4) erhält.

4. Das Energiespeichermodul (1) nach einem der voranstehenden Ansprüche, **dadurch gekennzeichnet,**
**dass** jede der Schwungradspeichereinheiten (2) einen elektromagnetischen Wandler (23) umfasst, der elektrisch über eine Motorregelung (21), vorzugsweise einen Frequenzumrichter (21), an den Gleichspannungszwischenkreis (5) angeschlossen ist.

5. Das Energiespeichermodul (1) nach Anspruch 4,
**dadurch gekennzeichnet,**
**dass** die Motorregelungen (21) aller Schwungradspeichereinheiten (2) dazu vorgesehen sind, die Gleichspannung (DC) im Gleichspannungszwischenkreis (5) kontinuierlich gegen den oberen Schwellwert (SW1) zu überwachen (U2) und spätestens bei einer Überschreitung des oberen Schwellwertes (SW1) selbsttätig jeglichen Leistungsfluss (LF) aus den Schwungradspeichereinheiten (2) in den Gleichspannungszwischenkreis (5) zu unterbinden (U3).

6. Das Energiespeichermodul (1) nach einem der Ansprüche 4 oder 5,
**dadurch gekennzeichnet,**
**dass** die Modulsteuereinheit (4) aktuelle Drehzahlen (DZ) der einzelne Schwungradspeichereinheiten (2) aus deren Motorregelungen (21) abruft und einen jeweiligen aktuellen Ladezustand der einzelnen Schwungradspeichereinheiten (2) aus der abgerufenen Drehzahl (DZ) bestimmt.

7. Das Energiespeichermodul (1) nach einem der voranstehenden Ansprüche,
**dadurch gekennzeichnet,**
**dass** in der Motorregelung (21) der Schwungradspeichereinheiten (2) eine obere Drehzahlbegrenzung und/oder eine untere Drehzahlbegrenzung implementier ist, vorzugsweise ist die obere Drehzahlbegrenzung und/oder untere Drehzahlbegrenzung durch ein hierfür vorgesehenes Bauteil (22) implementiert.

8. Das Energiespeichermodul (1) nach einem der voranstehenden Ansprüche,
**dadurch gekennzeichnet,**
**dass** in der Modulsteuereinheit (4) obere Drehzahlbegrenzungen und/oder untere Drehzahlbegrenzungen für die Drehmomentvorgaben (DV) implementiert sind, vorzugsweise sind die Drehzahlbegrenzungen als Anweisung in einem Computerprogramm implementiert.

9. Das Energiespeichermodul (1) nach einem der voranstehenden Ansprüche,
**dadurch gekennzeichnet,**
**dass** das Energiespeichermodul (1) ein oder mehrere Messeinheiten (7) zur kontinuierlichen Messung der Spannungsqualität des oder der externen Spannungsnetze (LS, NS) umfasst.

10. Das Energiespeichermodul (1) nach einem der voranstehenden Ansprüche,
**dadurch gekennzeichnet,**
**dass** die Modulsteuereinheit (4) dazu ausgestaltet ist, externe Daten (ED) zu empfangen und die Drehmomentvorgaben (DV) auf die empfangenen externen Daten (ED) anzupassen, vorzugsweise sind solche externe Daten (ED) physikalische Messgrößen, logische Größen, Echtzeit-Steuerkommandos oder Steuerkommandos zur Ablaufsteuerung.

11. Das Energiespeichermodul (1) nach einem der voranstehenden Ansprüche,
**dadurch gekennzeichnet,**
**dass** das Energiespeichermodul (1) des Weiteren Nebenaggregate (91, 92) zum Betrieb der Schwungradspeichereinheiten (2) umfasst und dass die Modulsteuereinheit (4) dazu ausgestaltet ist, eine Steuerung der Nebenaggregate (91, 92) auf empfangene interne Betriebsdaten (BD) oder externe Daten (ED) hin anzupassen, vorzugsweise umfassen die internen Betriebsdaten (BD) thermische Lasten innerhalb des Energiespeichermoduls wie von den Schwungradspeichereinheiten (2) oder von weiteren modulinternen Systemen.

12. Das Energiespeichermodul (1) nach einem der vorstehenden Ansprüche,
**dadurch gekennzeichnet,**
**dass** das Energiespeichermodul (1) zusätzlich ein oder mehrere mit den Nebenaggregaten (91, 92) verbundene Leistungssenken (6) umfasst.

13. Ein Verfahren zum Steuern eines Energiespeichermoduls (1) nach Anspruch 1 umfassend mehrerer Schwungradspeichereinheiten (2), mindestens ein Regelsystem (3) und mindestens eine Modulsteuereinheit, wobei die Schwungradspeichereinheiten (2) elektrisch parallel über einen gemeinsamen Gleichspannungszwischenkreis (5) verbunden sind,
**dadurch gekennzeichnet,**
**dass** das Regelsystem (3) mit einer Ausgangsseite (31) mit dem gemeinsamen Gleichspannungszwischenkreis (5) und mit einer Eingangsseite (32) mit mindestens einem überregionalen Wechselspannungsnetz (NS) als eines der externen Spannungsnetze (LS, NS) verbunden und dazu vorgesehen ist, die Gleichspannung (DC) im Gleichspannungszwischenkreis (5) zwischen einem oberen Schwellwert (SW1) und einem unteren Schwellwert (SW2) im Wesentlichen konstant zu halten, und dass das Verfahren die Schritte umfasst:
- Regeln des Energieflusses zwischen dem überregionalen Wechselspannungsnetz (NS) als angeschlossenes externes Spannungsnetz und den Schwungradspeichereinheiten (2) zur Ausführung von nicht-ortsgebundenen Regel- und Systemaufgaben in dem überregionalen Wechselspannungsnetz in einer von der Modulsteuereinheit vorgegebenen Weise mittels:
- Übermitteln (U1) einer Drehmomentvorgabe (DV) zum Beschleunigen (B) der Schwungradspeichereinheiten (2) durch die Modulsteuereinheit (4) an die Schwungradspeichereinheiten (3) bei einem Energiefluss (EFp) zumindest aus dem überregionalen Wechselspannungsnetz (NS) heraus in den Gleichspannungszwischenkreis (5) hinein oder
- Übermitteln (U1) einer Drehmomentvorgabe (DV) zum Abbremsen (A) der Schwungradspeichereinheiten (2) durch die Modulsteuereinheit (4) an die Schwungradspeichereinheiten (2) bei einem Energiefluss (EFn) aus dem Gleichspannungszwischenkreis (5) heraus zumindest in das überregionalen Wechselspannungsnetz (NS) hinein oder
- keine Übermittlung (U1) von Drehmomentvorgaben (DV) für die Schwungradspeichereinheiten (2) bei keinem Energiefluss (EF) in den oder aus dem Gleichspannungszwischenkreis (5) herein oder heraus.

14. Das Verfahren nach Anspruch 13, wobei jede der Schwungradspeichereinheiten (2) elektrisch über eine Motorregelung (21), vorzugsweise ein Frequenzumrichter (21), an den Gleichspannungszwischenkreis (5) angeschlossen ist, umfassend die weiteren Schritte:
- kontinuierliches Überwachen (U2) der Gleichspannung (DC) im Gleichspannungszwischenkreis (5) gegen den oberen Schwellwert (SW1) durch die Motorregelungen (21) aller Schwungradspeichereinheiten (2); und
- selbsttätiges Unterbinden (U3) jeglichen Leistungsflusses (LF) aus den Schwungradspeichereinheiten (2) in den Gleichspannungszwischenkreis (5) spätestens bei einer Überschreitung des oberen Schwellwertes (SW1) der Gleichspannung (DC) im Gleichspannungszwischenkreis (5) durch die Motorregelungen (21) aller Schwungradspeichereinheiten (2).

## Claims

1. An energy storage module (1) for the reversible storage of electric energy in the form of mechanical rotational energy, comprising several flywheel storage units (2), at least one control system (3) and at least one module control unit (4), whereby the flywheel storage units (2) are electrically connected in parallel via a shared DC link (5),
**characterized in that**
the control system (3) is connected via an output side (31) to the shared DC link (5) and via an input side (32) to at least one transregional AC network (NS) as one of the external power networks (LS, NS), and it is configured to regulate the flow of energy between the transregional AC network (NS), as the connected external power network, and the flywheel storage units (2) in order to carry out non-location-bound regulation and system tasks in the transregional AC network in a manner prescribed by the module control unit by transmitting (U1) suitable torque specifications (DV) to the flywheel storage units (2) in order to release (Ep) energy into or in order to withdraw (En) energy from the DC link (5) in such a way that, when energy is released (Ep) at least into the transregional AC network and when energy is withdrawn (Ep) at least from the transregional AC network, the direct current (DC) remains essentially constant between an upper threshold value (SW1) and a lower threshold value (SW2).

2. The energy storage module (1) according to claim 1,
**characterized in that**
the module control unit (4) is provided for the time-related generation and transmission (U1) of the torque specifications (DV) for the flywheel storage units (2), in response to which the flywheel storage units (2) feed (Sp) current into or remove (Sn) current from the DC link (5) on the basis of the time-related torque specifications (DV).

3. The energy storage module (1) according to claim 2,
**characterized in that**
each flywheel storage unit (2) receives individual torque specifications (DV) from the module control unit (4).

4. The energy storage module (1) according to one of the preceding claims,
**characterized in that**
each of the flywheel storage units (2) comprises an electromagnetic transformer (23) that is electrically connected to the DC link (5) via a motor control means (21), preferably a frequency converter (21).

5. The energy storage module (1) according to claim 4,
**characterized in that**
the motor control means (21) of all of the flywheel storage units (2) are configured to continuously monitor (U2) the direct voltage (DC) in the DC link (5) with regard to the upper threshold value (SW1) and, at the latest when the upper threshold value (SW1) has been exceeded, to autonomously prevent (U3) any power flow (LF) from the flywheel storage units (2) into the DC link (5).

6. The energy storage module (1) according to one of claims 4 or 5,
**characterized in that**
the module control unit (4) queries the momentary rotational speeds (DZ) of the individual flywheel storage units (2) from their motor control means (21) and, on the basis of the queried rotational speed (DZ), determines an appertaining momentary load state of the individual flywheel storage units (2).

7. The energy storage module (1) according to one of the preceding claims,
**characterized in that**
an upper rotational speed limit and/or a lower rotational speed limit are implemented in the motor control means (21) of the flywheel storage units (2); preferably the upper rotational speed limit and/or a lower rotational speed limit are implemented by means of a component (22) provided for this purpose.

8. The energy storage module (1) according to one of the preceding claims,
**characterized in that**
upper rotational speed limits and/or lower rotational speed limits are implemented in the module control unit (4) for the torque specifications (DV); preferably the rotational speed limits are implemented in the form of instructions in a computer program.

9. The energy storage module (1) according to one of the preceding claims,
**characterized in that**
the energy storage module (1) comprises one or more measuring units (7) to continuously measure the voltage quality of the external power network or networks (LS, NS).

10. The energy storage module (1) according to one of the preceding claims,
**characterized in that**
the module control unit (4) is configured to receive external data (ED) and to adapt the torque specifications (DV) to the received external data (ED); preferably such external data (ED) includes physical measured quantities, logical quantities, real-time control commands or control commands for sequence control.

11. The energy storage module (1) according to one of the preceding claims,
**characterized in that**
the energy storage module (1) also comprises auxiliary aggregates (91, 92) for the operation of the flywheel storage units (2), and **in that** the module control unit (4) is configured to adapt the control of the auxiliary aggregates (91, 92) to received internal operating data (BD) or external data (ED), preferably the internal operating data (BD) comprise thermal loads in the energy storage module such as those from the flywheel storage units (2) or from other module-internal systems.

12. The energy storage module (1) according to one of the preceding claims,
**characterized in that**
the energy storage module (1) additionally comprises one or more power sinks (6) that are connected to the auxiliary aggregates (91, 92).

13. A method for controlling an energy storage module (1) according to claim 1, comprising several flywheel storage units (2), at least one control system (3) and at least one module control unit, whereby the flywheel storage units (2) are electrically connected in parallel via a shared DC link (5),
**characterized in that**
the control system (3) is connected via an output side (31) to the shared DC link and via an input side (32) to at least one transregional AC network (NS) as one of the external power networks (LS, NS), and it is provided to keep the direct current (DC) in the DC link (5) essentially constant between an upper threshold value (SW1) and a lower threshold value (SW2), and **in that** the method comprises the following steps:
• the energy flow is regulated between the transregional AC network (NS), as a connected external power network, and the flywheel storage units (2) in order to carry out non-location-bound regulation and system tasks in the transregional AC network in a manner prescribed by the module control unit:
• a torque specification (DV) for accelerating (B) the flywheel storage units (2) is transmitted (U1) to the flywheel storage units (2) by the module control unit (4) at an energy flow (EFp) at least from the transregional AC network (NS) into the DC link (5), or
• a torque specification (DV) for decelerating (A) the flywheel storage units (2) is transmitted (U1) to the flywheel storage units (2) by the module control unit (4) at an energy flow (EFn) from the DC link (5) at least into the transregional AC network (NS), or
• in the case of no energy flow (EF), torque specifications (DV) for the flywheel storage units (2) are not transmitted (U1) into or from the DC link (5).

14. The method according to claim 13, whereby each of the flywheel storage units (2) is electrically connected to the DC link (5) via a motor control means (21), preferably a frequency converter (21), comprising the following additional steps:
• the direct current (DC) in the DC link (5) is continuously monitored (U2) with regard to the upper threshold value (SW1) by the motor control means (21) of all of the flywheel storage units (2); and
• the motor control means (21) of all of the flywheel storage units (2) autonomously prevents (U3) any power flow (LF) from the flywheel storage units (2) into the DC link (5), at the latest when the upper threshold value (SW1) of the direct current (DC) has been exceeded in the DC link (5).

## Revendications

1. Module de stockage d'énergie (1) destiné au stockage réversible d'énergie électrique sous la forme d'énergie de rotation mécanique, comprenant plusieurs unités de stockage à volant (2), au moins un système de régulation (3) et au moins une unité de commande de module (4), les unités de stockage à volant (2) étant reliées électriquement en parallèle par l'intermédiaire d'un circuit intermédiaire à tension continue commun (5),
**caractérisé en ce que**
le système de régulation (3) est relié, en un côté de sortie (31), au circuit intermédiaire à tension continue commun (5) et, en un côté d'entrée (32), à au moins un réseau de tension alternative suprarégional (NS) en tant que l'un des réseaux de tension externe (LS, NS) et est conçu pour réguler le flux d'énergie entre le réseau de tension alternative suprarégional (NS) en tant que réseau de tension externe raccordé et les unités de stockage à volant (2) aux fins de l'exécution de tâches de régulation et système non locales dans le réseau de tension alternative suprarégional d'une manière prédéterminée par l'unité de commande de module par transmission (U1) de spécifications de couple de rotation appropriés (DV) aux unités de stockage à volant (2) pour la délivrance (Ep) ou l'absorption (En) d'énergie au/du circuit intermédiaire à tension continue (5) de telle sorte que la tension continue (DC), à la délivrance (Ep) d'énergie au moins au réseau de tension alternative suprarégional et à l'absorption (En) d'énergie au moins du réseau de tension alternative suprarégional, reste sensiblement constante entre une valeur seuil supérieure (SW1) et une valeur seuil inférieure (SW2).

2. Module de stockage d'énergie (1) selon la revendication 1,
**caractérisé en ce que**
l'unité de commande de module (4) est prévue pour la génération et la transmission (U1), rapportées au temps, des spécifications de couple de rotation (DV) pour les unités de stockage à volant (2), suite à quoi les unités de stockage à volant (2) injectent (Sp) ou prélèvent (Sn) du courant dans le/du circuit intermédiaire à tension continue (5) sur la base des spécifications de couple de rotation (DV) rapportées au temps.

3. Module de stockage d'énergie (1) selon la revendication 2,
**caractérisé en ce que**
chaque unité de stockage à volant (2) reçoit des spécifications de couple de rotation individuelles (DV) de l'unité de commande de module (4).

4. Module de stockage d'énergie (1) selon l'une des revendications précédentes,
**caractérisé en ce que**
chacune des unités de stockage à volant (2) comprend un convertisseur électromagnétique (23) qui est raccordé électriquement au circuit intermédiaire à tension continue (5) via un réglage à moteur (21), de préférence un convertisseur de fréquence (21).

5. Module de stockage d'énergie (1) selon la revendication 4,
**caractérisé en ce que**
les réglages à moteur (21) de toutes les unités de stockage à volant (2) sont prévus pour surveiller (U2) en continu la tension continue (DC) dans le circuit intermédiaire à tension continue (5) par rapport à la valeur seuil supérieure (SW1) et pour couper (U3) automatiquement, au plus tard en cas de dépassement de la valeur seuil supérieure (SW1), tout flux de puissance (LF) allant des unités de stockage à volant (2) au circuit intermédiaire à tension continue (5).

6. Module de stockage d'énergie (1) selon l'une des revendications 4 ou 5,
**caractérisé en ce que**
l'unité de commande de module (4) extrait des vitesses de rotation actuelles (DZ) des différentes unités de stockage à volant (2) de leurs réglages à moteur (21) et détermine un état de charge actuel respectif des différentes unités de stockage à volant (2) à partir de la vitesse de rotation extraite (DZ).

7. Module de stockage d'énergie (1) selon l'une des revendications précédentes,
**caractérisé en ce que**
dans le réglage à moteur (21) des unités de stockage à volant (2) sont implémentées une limitation supérieure de vitesse de rotation et/ou une limitation inférieure de vitesse de rotation, la limitation supérieure de vitesse de rotation et/ou la limitation inférieure de vitesse de rotation étant préférentiellement implémentées par un composant (22) prévu à cet effet.

8. Module de stockage d'énergie (1) selon l'une des revendications précédentes,
**caractérisé en ce que**
dans l'unité de commande de module (4) sont implémentées des limitations supérieures de vitesse de rotation et/ou des limitations inférieures de vitesse de rotation pour les spécifications de couple de rotation (DV), les limitations de vitesse de rotation étant préférentiellement implémentées en tant qu'instruction dans un programme informatique.

9. Module de stockage d'énergie (1) selon l'une des revendications précédentes,
**caractérisé en ce que**
le module de stockage d'énergie (1) comprend une ou plusieurs unités de mesure (7) pour mesurer en continu la qualité de la tension du ou des réseaux de tension externe (LS, NS).

10. Module de stockage d'énergie (1) selon l'une des revendications précédentes,
**caractérisé en ce que**
l'unité de commande de module (4) est conçue pour recevoir des données externes (ED) et adapter les spécifications de couple de rotation (DV) aux données externes reçues (ED), de telles données externes (ED) étant préférentiellement des grandeurs de mesure physiques, des grandeurs logiques, des instructions de commande en temps réel ou des instructions de commande pour la commande du déroulement.

11. Module de stockage d'énergie (1) selon l'une des revendications précédentes,
**caractérisé en ce que**
le module de stockage d'énergie (1) comprend en outre des organes auxiliaires (91, 92) pour faire fonctionner les unités de stockage à volant (2) et **en ce que** l'unité de commande de module (4) est conçue pour adapter une commande des organes auxiliaires (91, 92) compte tenu de données de service internes (BD) ou de données externes (ED) reçues, les données de service internes (BD) comprenant préférentiellement des charges thermiques à l'intérieur du module de stockage d'énergie, telles que celles des unités de stockage à volant (2) ou d'autres systèmes internes du module.

12. Module de stockage d'énergie (1) selon l'une des revendications précédentes,
**caractérisé en ce que**
le module de stockage d'énergie (1) comprend en outre un ou plusieurs récepteurs d'énergie (6) reliés aux organes auxiliaires (91, 92).

13. Procédé de commande d'un module de stockage d'énergie (1) selon la revendication 1, comprenant plusieurs unités de stockage à volant (2), au moins un système de régulation (3) et au moins une unité de commande de module, les unités de stockage à volant (2) étant reliées électriquement en parallèle par l'intermédiaire d'un circuit intermédiaire à tension continue commun (5),
**caractérisé en ce que**
le système de régulation (3) est relié, en un côté de sortie (31), au circuit intermédiaire à tension continue commun (5) et, en un côté d'entrée (32), à au moins un réseau de tension alternative suprarégional (NS) en tant que l'un des réseaux de tension externe (LS, NS) et est prévu pour maintenir sensiblement constante la tension continue (DC) dans le circuit intermédiaire à tension continue (5) entre une valeur seuil supérieure (SW1) et une valeur seuil inférieure (SW2) et **en ce que** le procédé comprend les étapes suivantes :
- régulation du flux d'énergie entre le réseau de tension alternative suprarégional (NS) en tant que réseau de tension externe raccordé et les unités de stockage à volant (2) aux fins de l'exécution de tâches de régulation et système non locales dans le réseau de tension alternative suprarégional d'une manière prédéterminée par l'unité de commande de module par :
- transmission (U1) d'une spécification de couple de rotation (DV) aux unités de stockage à volant (3) pour accélérer (B) les unités de stockage à volant (2) par l'unité de commande de module (4) pour un flux d'énergie (EFn) au moins du réseau de tension alternative suprarégional (NS) au circuit intermédiaire à tension continue (5) ou
- transmission (U1) d'une spécification de couple de rotation (DV) unités de stockage à volant (2) pour freiner (A) les unités de stockage à volant (2) par l'unité de commande de module (4) pour un flux d'énergie (EFn) du circuit intermédiaire à tension continue (5) au moins au réseau de tension alternative suprarégional (NS) ou
- pas de aucune transmission (U1) de spécifications de couple de rotation (DV) pour les unités de stockage à volant (2) lorsqu'il n'y a pas de flux d'énergie (EF) entrant dans ou sortant du circuit intermédiaire à tension continue (5).

14. Procédé selon la revendication 13, chacune des unités de stockage à volant (2) étant raccordée électriquement au circuit intermédiaire à tension continue (5) par l'intermédiaire d'un réglage à moteur (21), préférentiellement un convertisseur de fréquence (21), comprenant les étapes suivantes :
- surveillance continue (U2) de la tension continue (DC) dans le circuit intermédiaire à tension continue (5) par rapport à la valeur seuil supérieure (SW1) par les réglages à moteur (21) de toutes les unités de stockage à volant (2) et
- coupure automatique (U3) de tout flux de puissance (LF) allant des unités de stockage à volant (2) au circuit intermédiaire à tension continue (5) au plus tard en cas de dépassement de la valeur seuil supérieure (SW1) de la tension continue (DC) dans le circuit intermédiaire à tension continue (5) par les réglages à moteur (21) de toutes les unités de stockage à volant (2).
